(19) Europäisches Patentamt
European Patent Office
Office européen des brevets

(11) EP 4 473 837 A1

(12) EUROPEAN PATENT APPLICATION
published in accordance with Art. 153(4) EPC

(43) Date of publication:
**11.12.2024 Bulletin 2024/50**

(21) Application number: **23780607.0**

(22) Date of filing: **28.03.2023**

(51) International Patent Classification (IPC):
***A01N 59/08** (2006.01)* ***A01N 25/22** (2006.01)*
***A01N 33/12** (2006.01)* ***A01P 1/00** (2006.01)*
***B01J 31/02** (2006.01)* ***C07C 31/135** (2006.01)*
***C07C 33/22** (2006.01)* ***C07C 35/12** (2006.01)*
***C07C 35/17** (2006.01)* ***C07C 49/385** (2006.01)*
***C07C 49/603** (2006.01)* ***C11B 9/00** (2006.01)*

(52) Cooperative Patent Classification (CPC):
**A01N 25/22; A01N 33/12; A01N 59/08; A01P 1/00; B01J 31/02; C07C 31/135; C07C 33/22; C07C 35/12; C07C 35/17; C07C 49/385; C07C 49/603; C11B 9/00**

(86) International application number:
**PCT/JP2023/012670**

(87) International publication number:
**WO 2023/190598 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022058632**

(71) Applicant: **Earth Corporation**
**Tokyo 101-0048 (JP)**

(72) Inventors:
- **ASAI, Rika**
  **Ako City, Hyogo 678-0192 (JP)**
- **OTA, Manami**
  **Ako City, Hyogo 678-0192 (JP)**

(74) Representative: **J A Kemp LLP**
**80 Turnmill Street**
**London EC1M 5QU (GB)**

# (54) COMPOSITION

(57) It is an object of the present invention to provide a composition in which an additive component other than a radical generation source and a radical generation catalyst is stable for a long period of time and hard to be decomposed. To achieve this object, the present invention provides a composition, including: (a) a radical generation catalyst; (b) a radical generation source, and (c) an additive component, wherein: the additive component includes at least one kind of compound selected from the group consisting of a compound represented by the following chemical formula (I), eucalyptol, dihydroterpineol, 1,4-cineole, pulegone, eugenol, thymol, and benzyl alcohol.

EP 4 473 837 A1

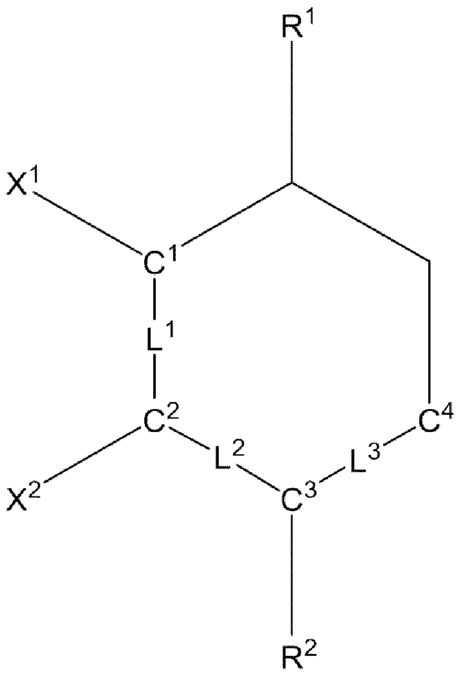

( I )

In the chemical formula (I): R1 and R2 are respectively a linear or branched and saturated or unsaturated hydrocarbon group, or the hydrocarbon group in which one or more of hydrogen atoms are substituted with a hydroxyl grop, and $R^1$ and $R^2$ are the same or different from each other; $X^1$ and $X^2$ are respectively a hydrogen atom, a hydroxyl group, or an oxo group, and are the same or different from each other, provided that at least one of $X^1$ and $X^2$ is a hydroxyl group or an oxo group; $C^1$, $C^2$, and $C^3$ are respectively a carbon atom or CH, and are the same or different from each other; $C^4$ is CH or $CH_2$, and $L^1$, $L^2$ and $L^3$ are respectively a single bond or a double bond, and are the same or different from each other, provided that the compound represented by the chemical formula (I) does not contain isopulegol.

## Description

TECHNICAL FIELD

The present invention relates to a composition.

BACKGROUND ART

As being highly reactive, radicals are important chemical species that are widely used. For example, sodium chlorite ($NaClO_2$) is a non-toxic and inexpensive oxidization reagent and has been used as a precursor for radical chlorine dioxide (ClO2•) (Non-patent Literatures 1 to 4).

Citation List

Non Patent Literature

Non Patent Literature 1: H. Dodgen and H. Taube, J. Am. Chem. Soc., 1949, 71, 2501-2504.
Non Patent Literature 2: J. K. Leigh, J. Rajput, and D. E. Richardson, Inorg. Chem., 2014, 53,6715-6727.
Non Patent Literature 3: C. L. Latshaw, Tappi, 1994, 163-166.
Non Patent Literature 4: (a) J. J. Leddy, in Riegel's Handbook of Industrial Chemistry, 8th edn. Ed., J. A. Kent, Van Nostrand Reinhold Co. Inc, New York, 1983, pp. 212-235; (b) I. Fabian, Coord. Chem. Rev., 2001, 216-217, 449-472.

SUMMARY OF INVENTION

Technical Problem

When a radical generation source and a radical generation catalyst coexist in a composition, activity of radicals from the radical generation source is catalyzed by the radical generation catalyst, whereby the convenience of the radical generation source can be further improved. However, when an additive component different from the radical generation source and the radical generation catalyst is further added to the composition, the additive component may decompose with aging.

Hence, it is an object of the present invention to provide a composition in which an additive component other than a radical generation source and a radical generation catalyst is stable for a long period of time and hard to be decomposed.

Solution to Problem

To achieve the above object, the present invention provides a composition, including:

(a) a radical generation catalyst;
(b) a radical generation source, and
(c) an additive component, wherein

the additive component includes at least one kind of compound selected from the group consisting of a compound represented by the following chemical formula (I), eucalyptol, dihydroterpineol, 1,4-cineole, pulegone, eugenol, thymol, and benzyl alcohol.

[Chemical Formula I]

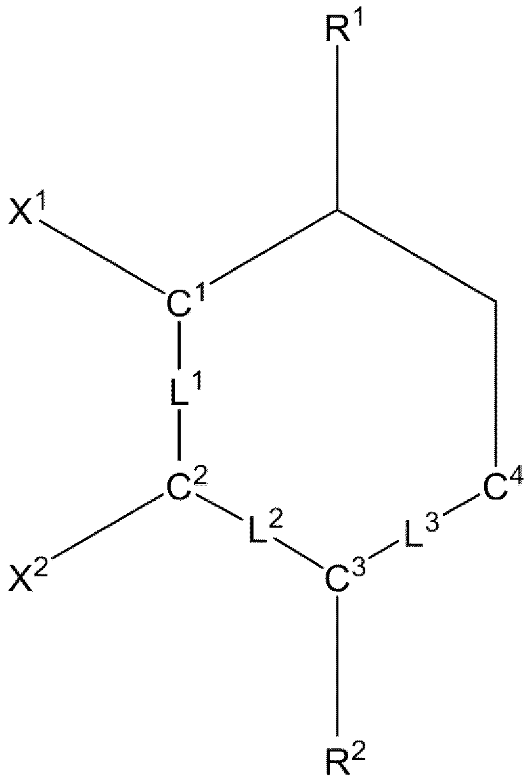

(I)

In the chemical formula (I):

$R^1$ and $R^2$ may respectively be a linear or branched and saturated or unsaturated hydrocarbon group, or the hydrocarbon group in which one or more of hydrogen atoms are substituted with a hydroxyl group, and $R^1$ and $R^2$ may be the same or different from each other;
$X^1$ and $X^2$ are respectively a hydrogen atom, a hydroxyl group, or an oxo group, and $X^1$ and $X^2$ may be the same or different from each other, provided that at least one of $X^1$ and $X^2$ is a hydroxyl group or an oxo group;
$C^1$, $C^2$, and $C^3$ are respectively a carbon atom or CH, and $C^1$, $C^2$, and $C^3$ may be the same or different from each other;
$C^4$ is CH or $CH_2$, and
$L^1$, $L^2$ and $L^3$ are respectively a single bond or a double bond, and $L^1$, $L^2$ and $L^3$ may be the same or different from each other.
It is to be noted that:

when $X^1$ is an oxo group, $C^1$ is a carbon atom, and $L^1$ is a single bond;
when $X^2$ is an oxo group, $C^2$ is a carbon atom, and each of $L^1$ and $L^2$ is a single bond;
when $L^1$ is a double bond, each of $C^1$ and $C^2$ is a carbon atom, each of $X^1$ and $X^2$ is not an oxo group, and $L^2$ is a single bond;
when $L^2$ is a double bond, each of $C^2$ and $C^3$ is a carbon atom, and each of $L^1$ and $L^3$ is a single bond;
when $L^3$ is a double bond, $C^3$ is a carbon atom, $C^4$ is CH, and $L^2$ is a single bond;
when $L^3$ is a single bond, $C^4$ is $CH_2$, and
the compound represented by the chemical formula (I) does not contain isopulegol. Advantageous Effects of Invention

The present invention can provide a composition in which an additive component other than a radical generation source and a radical generation catalyst is stable for a long period of time and hard to be decomposed.

DESCRIPTION OF EMBODIMENTS

Hereinafter, the present invention will be described in more detail with reference to examples. However, the present invention is not limited by the following description.

[1. Composition]

As described above, the composition of the present invention includes:

(a) a radical generation catalyst;
(b) a radical source, and
(c) an additive component, wherein

the additive component includes at least one kind of compound selected from the group consisting of a compound represented by the chemical formula (I), eucalyptol, dihydroterpineol, 1,4-cineole, pulegone, eugenol, thymol, and benzyl alcohol. Eucalyptol is sometimes referred to as "1,8-cineole" or the like.
In the composition of the present invention, for example, the compound represented by the chemical formula (I) may be at least one selected from the group consisting of menthol, menthone, isomenthone, piperitone, dihydrocarvone, carveol, and carvone.
In the composition of the present invention, for example, the radical generation catalyst may be an ammonium salt having Lewis acidity of 0.4eV or higher.
In the composition of the present invention, for example, the radical generation source may be at least one selected from the group consisting of a halous acid, a halous acid ion, and a halous acid salt.
The composition of the present invention may be, for example, non-acidic and liquid.
As the radical generation source, for example, sodium chlorite ($NaClO_2$), which is a kind of chlorite and can serve as a non-toxic and inexpensive oxidization reagent, is used as a precursor for radical chlorine dioxide ($ClO_2$ •), as described above.
However, since chlorous acid is a powerful oxidization agent, it may react with an additive component in a composition, and cause decomposition and reduction of the additive component. For this reason, it has been difficult to add an additive component such as a perfume to a composition containing chlorous acid to freely add an aroma or a flavor. In addition, when a radical generation catalyst for catalyzing the generation of radical chlorine dioxide from chlorous acid or a salt thereof is used in combination, the decomposition and reduction of the additive component may further be accelerated.
As a result of studies to solve such problems, the present inventors have found that, as an additive component to be added to a composition containing a radical generation catalyst and a radical generation source, the compound represented by the chemical formula (I), eucalyptol, dihydroterpineol, 1,4-cineole, pulegone, eugenol, thymol, and benzyl alcohol are stable for a long period of time and are hardly decomposed. These additive components function as perfumes, for example. Therefore, the composition of the present invention can realize, for example, stable blending of a perfume into a composition containing chlorous acid or a salt thereof, for the impartation of an appropriate aroma or flavor. As a result, for example, chlorous acid or a salt thereof becomes able to be used as a radical generation source in various situations, and the range of its use can be greatly expanded. For example, chlorous acid or a salt thereof has conventionally been used mainly by spraying treatment or immersion treatment as a highly concentrated aqueous solution. To this, the present invention allows impartation of an appropriate feeling of use (scent) by adding the additive component to an aqueous solution containing chlorous acid or a salt thereof and a radical generation catalyst, and comfortable use of chlorous acid at a low concentration in various situations, for example.
In the present invention, the radical generation source is not limited only to chlorous acid and a salt thereof, but is arbitrary. Specific examples thereof will be described later.
In the present invention, when an isomer such as a tautomer or a stereoisomer (e.g., a geometric isomer, a conformational isomer, and an optical isomer) is present in a compound (e.g., the additive component represented by the chemical formula (I), and ammonium, an amino acid, a peptide, a phospholipid, and the like, which will be described later), any isomer can be used in the present invention unless otherwise specified. For example, in the present invention, the term "isomenton" may refer to (-)-isomenton (also referred to as 1-isomenton) or (+)-isomenton (also referred to as d-isomenton), or may include both of the isomers, unless otherwise specified. When the compound can form a salt, the salt can also be used in the present invention unless otherwise specified. The salt may be an acid addition salt or a base addition salt. Further, acid forming the acid addition salt may be inorganic acid or organic acid, and a base forming the base addition salt may be an inorganic base or an organic base. Non-limiting examples of the inorganic acid include sulfuric acid, phosphoric acid, hydrofluoric acid, hydrochloric acid, hydrobromic acid, hydroiodic acid, hypofluorous acid, hypochlorous acid, hypobromous acid, hypoiodous acid, fluorous acid, chlorous acid, bromous acid, iodous acid, fluoric acid, chloric acid, bromic acid, iodic acid, perfluoric acid, perchloric acid, perbromic acid, and periodic acid. Non-limiting examples of

the organic acid include p-toluenesulfonic acid, methanesulfonic acid, oxalic acid, p-bromobenzenesulfonic acid, carbonic acid, succinic acid, citric acid, benzoic acid, and acetic acid. Non-limiting examples of the inorganic base include ammonium hydroxide, an alkali metal hydroxide, an alkali earth metal hydroxide, a carbonate, and a hydrogencarbonate, and more specifically, sodium hydroxide, potassium hydroxide, potassium carbonate, sodium carbonate, sodium hydrogencarbonate, potassium hydrogencarbonate, calcium hydroxide, and calcium carbonate. Non-limiting examples of the organic base include ethanolamine, triethylamine, and tris(hydroxymethyl)aminomethane. Methods for producing these salts is not particularly limited, and may be, for example, methods such as appropriately adding the above-described acid or base to the compound by known methods.

In the present invention, a chain substituent (e.g., hydrocarbon group such as an alkyl group and an unsaturated fatty hydrocarbon group) may be linear or branched, and the carbon number thereof is not particularly limited and may be, for example, 1-40, 1-32, 1-24, 1-18, 1-12, 1-6, or 1-2 (2 or more when the chain substituent is an unsaturated hydrocarbon group), unless otherwise specified. Further, in the present invention, the ring member number (the number of atoms constituting the ring) of a cyclic group (e.g., an aryl group, a heteroaryl group, etc.) is not particularly limited and may be, for example, 5-32, 5-24, 6-18, 6-12, or 6-10. When an isomer is present in the substituent or the like, the isomer may be any isomer unless otherwise specified. For example, the term "naphthyl group" may refer to a 1-naphthyl group or a 2-naphthyl group.

[1-1. Composition (a): Radical Generation Catalyst]

In the composition of the present invention, the radical generation catalyst as the component (a) is not particularly limited, and specific examples thereof are as follows. In the following, a radical generation catalyst which can be used as the component (a) in the composition of the present invention may be referred to as the "radical generation catalyst of the present invention".

The radical generation catalyst of the present invention may be, for example, an organic compound or an inorganic substance. The organic compound may be, for example, at least one selected from the group consisting of ammonium, an amino acid, a peptide, a phospholipid, and salts thereof. The inorganic substance may include one or both of a metal ion and a non-metal ion. The metal ion may include one or both of a typical metal ion and a transition metal ion. The inorganic substance may be, for example, at least one selected from the group consisting of an alkaline earth metal ion, a rare earth ion, $Sc^{3+}$, $Li^{+}$, $Fe^{2+}$, $Fe^{3+}$, $Al^{3+}$, a silicate ion, and a borate ion. Examples of the alkaline earth metal ion include an ion of calcium, strontium, barium, or radium, and more specifically, $Ca^{2+}$, $Sr^{2+}$, $Ba^{2+}$, and $Ra^{2+}$. The "rare earth" is a generic term for a total of 17 elements including two elements of scandium $_{21}Sc$ and yttrium $_{39}Y$ and 15 elements (lanthanoids) from lanthanum $_{57}La$ to lutetium $_{71}Lu$. Examples of the rare earth ion include trivalent cations for each of the 17 elements.

The radical generation catalyst of the present invention may be, for example, a Lewis acid having Lewis acidity of 0.4eV or higher. The Lewis acid is not particularly limited, and may be, for example, an organic compound or an inorganic substance as described above.

The Lewis acid (including a counter ion) may be, for example, at least one selected from the group consisting of $CaCl_2$, $MgCl_2$, $FeCl_2$, $FeCl_3$, $AlCl_3$, $AlMeCl_2$, $AlMe_2Cl$, $BF_3$, $BPh_3$, $BMe_3$, $TiCl_4$, $SiF_4$, and $SiCl_4$. Herein, "Ph" represents a phenyl group, and "Me" represents a methyl group.

In the radical generation catalyst of the present invention, the radical generation catalyst may be appropriately selected in consideration of the strength of reactivity, the strength of acidity, safety, and the like, depending on the purpose.

The present inventors have found that ammonium (especially organic ammonium), an amino acid, a peptide, and a phospholipid function as a radical generation catalyst as a result of studies. As a result of further studies, the present inventors have found that ammonium, an amino acid, a peptide, and a phospholipid which function as a radical generation catalyst sometimes have Lewis acid properties. That is, although the reason why ammonium, an amino acid, a peptide, and a phospholipid function as a radical generation catalyst is not clear, it is presumed that the reason is because the ammonium, the amino acid, the peptide, and the phospholipid have a function as a Lewis acid. As a result of further studies, the present inventors have found a radical generation catalyst containing an organic compound having at least one of Lewis acidity and Bronsted acidity. Note that, in the present invention, a "Lewis acid" refers to a substance which acts as a Lewis acid with respect to the radical generation source, for example.

The Lewis acidity of the radical generation catalyst of the present invention is, for example, 0.4eV or higher, 0.5eV or higher, or 0.6eV or higher. The upper limit of the Lewis acidity is not particularly limited, and for example, 20eV or lower. In the present invention, as a reference for determining that the Lewis acidity is equal to or higher, or lower than the above numerical value is, for example, whether a measurement value obtained by either one of "Lewis acidity measurement method (1)" or "Lewis acidity measurement method (2)" which will be described later is equal to or higher, or lower than the above numerical value.

The Lewis acidity can be measured by the method described in Ohkubo, K.; Fukuzumi, S. Chem. Eur. J., 2000, 6, 4532, J. AM. CHEM. SOC. 2002, 124, 10270-10271, or J. Org. Chem. 2003, 68, 4720-4726, and specifically by the "Lewis

acidity measurement method (1)" described below.

(Lewis Acidity Measurement Method (1))

Acetonitrile (MeCN) containing cobalt tetraphenylporphyrin, saturated $O_2$, and the subject of the Lewis acidity measurement (e.g., cations such as metals and represented by $M^{n+}$ in the following chemical reaction formula (1a)) in the chemical reaction formula (1a) below is subjected to the measurement of the UV-Visible absorption spectral change, at a room temperature. ΔE value (eV), which is an indicator of the Lewis acidity, can be calculated from the obtained reaction rate constant ($k_{cat}$). The larger $k_{cat}$ indicates the stronger Lewis acidity. Lewis acidity of an organic compound can also be estimated from the energy level of the lowest unoccupied molecular orbital (LUMO) calculated by the quantum chemical computation. The higher positive value indicates the stronger Lewis acidity.

[Formula 1a]

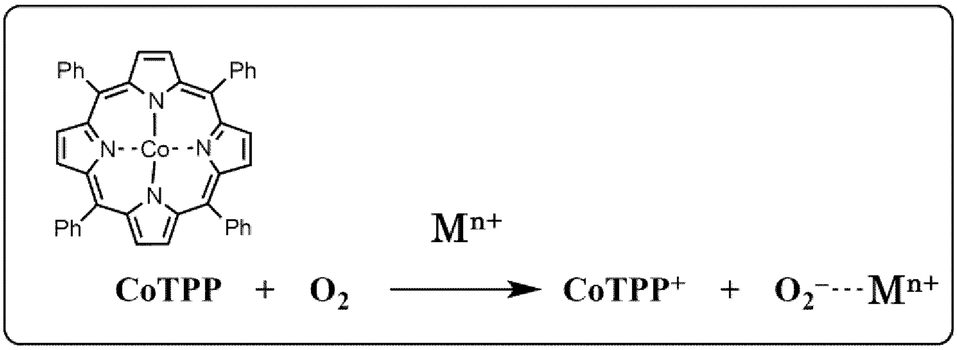


(1a)

The reaction rate constant of CoTPP and oxygen under the presence of Lewis acid, which is an indcator of Lewis acidity measured (calculated) by the above-described measurement method, is exemplarily shown below. In the table below, the numerical values represented by "$k_{cat}$, $M^{-2}s^{-1}$" are CoTPP and oxygen under the presence of a Lewis acid. The numerical value represented by "LUMO, eV" is an energy level of LUMO. "Benzetonium chloride" represents benzethonium chloride, "benzalkonium chloride" represents benzalkonium chloride, "tetramethylammonium hexafluorophosphate" represents tetramethylammonium hexafluorophosphate, "tetrabutylammonium hexafluorophosphate" represents tetrabutylammonium hexafluorophosphate, and "ammonium hexafluorophosphate" represents ammonium hexafluorophosphate.

[Table tpp]

| | LUMO, eV | $k_{cat}$, $M^{-2}$ $S^{-1}$ |
|---|---|---|
| benzetonium chloride | -4.12 | 0.24 |
| benzalkonium chloride | -4.02 | 0.18 |
| tetramethylammonium hexafluorophosphate | -3.58 | > 0.1 |
| tetrabutylammonium hexafluorophosphate | -2.07 | > 0.1 |
| ammonium hexafluorophosphate | -5.73 | 20 |

In the present invention, Lewis acidity may be measured by, the Lewis acidity measuring method (1), reducing ubiquinone 1 to generate an anion radical of ubiquinone 1, using ubiquinone 1 (Q1) instead of an oxygen molecule ($O_2$). Such a method for measuring Lewis acidity is hereinafter sometimes referred to as " Lewis acidity measurement method (2)". In the Lewis acidity measurement method (2), the measurement can be performed in the same manner as in the Lewis acidity measuring method (1), except that ubiquinone 1 (Q1) is used instead of the oxygen molecule ($O_2$). In the Lewis acidity measurement method (2), the ΔE value (eV), which is an indicator of Lewis acidity, can be calculated from the obtained reaction rate constant ($k_{cat}$) in the same manner as in the Lewis acidity measurement method (1). The Lewis acidity measurement method (2) is described in, for example, Ohkubo, K.; Fukuzumi, S. Chem. Eur. J., 2000, 6, 4532, for example, and can be performed according to or based on the method described therein.

The Lewis acidity measurement method (2) can be performed by measuring the reaction rate constant ($k_{cat}$) with

respect to the following chemical reaction formula (1b).

[Formula 1b]

Cobalt (II) tetraphenylporphyrin
Ubiquinone 1

$$\mathrm{Co\,TPP + Q1} \xrightarrow{M^{n+}} [(\mathrm{TPP})\mathrm{Co}]^{+} + (\mathrm{Q1})^{\cdot -}\text{—}M^{n+} \qquad (1b)$$

In the chemical reaction formula (1b),

$M^{n+}$ represents the radical generation catalyst,
CoTPP represents cobalt(II)tetraphenylporphyrin,
Q1 represents ubiquinone 1,
$[(TPP)Co]^+$ represents a cobalt(III)tetraphenylporphyrin cation, and
$(Q1)^{\cdot -}$ represents an anion radical of ubiquinone 1.

Lewis acidity of the radical generation catalyst of the present invention may show, for example, a reaction rate constant ($k_{cat}$) to the chemical reaction formula (1b), that is a measurement value ($K_{obs}$) of the reaction rate constant ($k_{cat}$) measured by the Lewis acidity measurement method (2), for example, of $1.0\times10^{-5}S^{-1}$ or more, $2.0\times10^{-5}S^{-1}$ or more, $3.0\times10^{-5}S^{-1}$ or more, $4.0\times10^{-5}S^{-1}$ or more, $5.0\times10^{-5}S^{-1}$ or more, $6.0\times10^{-5}S^{-1}$ or more, $7.0\times10^{-5}S^{-1}$ or more, $8.0\times10^{-5}S^{-1}$ or more, $9.0\times10^{-5}S^{-1}$ or more, $1.0\times10^{-4}S^{-1}$ or more, $2.0\times10^{-4}S^{-1}$ or more, $3.0\times10^{-4}S^{-1}$ or more, $4.0\times 10^{-4}S^{-1}$ or more, $5.0\times 10^{-4}S^{-1}$ or more, $6.0\times 10^{-4}S^{-1}$ or more, $7.0\times10^{-4}S^{-1}$ or more, $8.0\times10^{-4}S^{-1}$ or more, $9.0\times10^{-4}S^{-1}$ or more, $1.0\times10^{-3}S^{-1}$ or more, $2.0\times10^{-3}S^{-1}$ or more, $3.0\times10^{-3}S^{-1}$ or more, $4.0\times 10^{-3}S^{-1}$ or more, $5.0\times 10^{-3}S^{-1}$ or more, $6.0\times 10^{-3}S^{-1}$ or more, 7.0x $10^{-3}S^{-1}$ or more, $8.0\times 10^{-3}S^{-1}$ or more, $9.0\times10^{-3}S^{-1}$ or more, $1.0\times10^{-2}S^{-1}$ or more, $2.0\times10^{-2}S^{-1}$ or more, $3.0\times 10^{-2}S^{-1}$ or more, $4.0\times 10^{-2}S^{-1}$ or more, $5.0\times 10^{-2}S^{-1}$ or more, $6.0\times10^{-2}S^{-1}$ or more, 7.0x $10^{-2}S^{-1}$ or more, $8.0\times 10^{-2}S^{-1}$ or more, or $9.0\times 10^{-2}S^{-1}$ or more, and may be, $1.0\times10^{-1}1S^{-1}$ or less, $9.0\times 10^{-2}S^{-1}$ or less, $8.0\times 10^{-2}S^{-1}$ or less, $7.0\times10^{-2}S^{-1}$ or less, $6.0\times 10^{-2}S^{-1}$ or less, $5.0\times 10^{-2}S^{-1}$ or less, $4.0\times10^{-2}S^{-1}$ or less, $3.0\times10^{-2}S^{-1}$ or less, $2.0\times10^{-2}S^{-1}$ or less, $1.0\times10^{-2}S^{-1}$ or less, $9.0\times 10^{-3}S^{-1}$ or less, $8.0\times10^{-3}S^{-1}$ or less, $7.0\times10^{-3}S^{-1}$ or less, 6.0x $10^{-3}S^{-1}$ or less, $5.0\times 10^{-3}S^{-1}$ or less, $4.0\times 10^{-3}S^{-1}$ or less, 3.0x $10^{-3}S^{-1}$ or less, $2.0\times10^{-3}S^{-1}$ or less, $1.0\times10^{-3}S^{-1}$ or less, $9.0\times10^{-4}S^{-1}$ or less, $8.0\times 10^{-4}S^{-1}$ or less, $7.0\times 10^{-4}S^{-1}$ or less, $6.0\times10^{-4}S^{-1}$ or less, $5.0\times 10^{-4}S^{-1}$ or less, $4.0\times 10^{-4}S^{-1}$ or less, $3.0\times10^{-4}S^{-1}$ or less, 2.0x $10^{-4}S^{-1}$ or less, $1.0\times10^{-4}S^{-1}$ or less, $9.0\times10^{-5}S^{-1}$ or less, $8.0\times10^{-5}S^{-1}$ or less, or $7.0\times10^{-5}S^{-1}$ or less.

In the radical generation catalyst of the present invention, the ammonium may be, for example, quaternary ammonium or tertiary, secondary, primary, or zero-degree ammonium. Further, the ammonium is not particularly limited, and may be, for example, a nucleobase or the like, or may be an amino acid, a peptide, or the like which will be described later.

Further, in the radical generation catalyst of the present invention, the at least one selected from the group consisting of ammonium, an amino acid, a peptide, a phospholipid, and salts thereof (the first radical generation catalyst of the present invention), or a compound having at least one of Lewis acidity and Broensted acidity (the second radical generation catalyst of the present invention) may be, for example, a cationic surfactant or a quaternary ammonium-type cationic surfactant. Examples of the quaternary ammonium-type cationic surfactant include benzalkonium chloride, benzethonium chloride, cetylpyridinium chloride, hexadecyltrimethylammonium bromide, dequaliniumu chloride, edrophonium, didecyldimethylammonium chloride, tetramethylammonium chloride, tetrabutylammonium chloride, benzyltriethylammonium chloride, oxytropium, carbachol, glycopyrronium, safranin, cinapine, tetraethylammonium bromide, hexadecyltrimethylammonium bromide, suxamethonium, sphingomyelin, ganglioside GM1, denatonium, trigonelline, neostigmine, paracoat, pyridostigmine, ferrodendrin, pralidoxime iodomethyl, betaine, betanin, bethanecol, betalein, lecithin, adenine, guanine, cytosine, thymine, uracil, and cholines (benzoylcholine chloride, choline chloride such as lauroyl choline chloride hydrate, phosphocholine, acetylcholine, choline, dipalmitoyl phosphatidylcholine, and choline bitartrate). However, in the method for producing a radical according to the present invention, the quaternary ammonium is not limited to a surfactant.

In the radical generation catalyst of the present invention, the ammonium may be, for example, ammonium represented by the following chemical formula (XI).

[Chemical Formula XI]

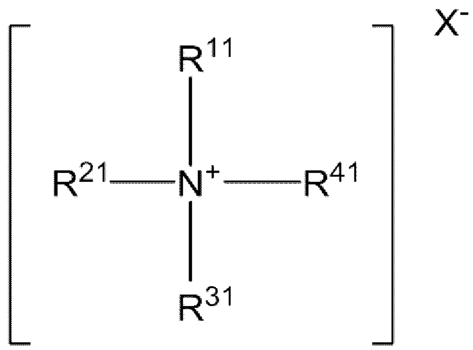

(XI)

In the chemical formula (XI):

$R^{11}$, $R^{21}$, $R^{31}$, and $R^{41}$ are respectively a hydrogen atom or an aromatic ring, or an alkyl group, and the alkyl group may include an ether bond, a carbonyl group, an ester bond, an amide bond, or an aromatic ring, and $R^{11}$, $R^{21}$, $R^{31}$, and $R^{41}$ may be the same or different from each other;

alternatively, two or more of $R^{11}$, $R^{21}$, $R^{31}$, and $R^{41}$ may be integrated with each other to form a cyclic structure together with $N^+$ to which the two or more of $R^{11}$, $R^{21}$, $R^{31}$, and $R^{41}$ are bonded, and the cyclic structure may be saturated or unsaturated, may be an aromatic ring or a non-aromatic ring, and may or may not necessarily have one or more substituents, and

$X^-$ is an anion, and $X^-$ is, for example, an anion excluding a peroxydisulfuric acid ion.

In $R^{11}$, $R^{21}$, $R^{31}$, and $R^{41}$, the aromatic ring is not particularly limited, and may or may not necessarily contain a heteroatom, and may or may not necessarily have a substituent. Examples of the aromatic ring containing a heteroatom (heteroaromatic ring) include a nitrogen-containing aromatic ring, a sulfur-containing aromatic ring, and an oxygen-containing aromatic ring. Examples of the aromatic ring containing no heteroatom include a benzene ring, a naphthalene ring, an anthracene ring, and a phenanthrene ring. Examples of the heteroaromatic ring include a pyridine ring, a thiophene ring, and a pyrene ring. The nitrogen-containing aromatic ring may or may not necessarily have a positive charge, for example. Examples of the nitrogen-containing aromatic ring having no positive charge include a pyrroline ring, a pyridine ring, a pyridazine ring, a pyrimidine ring, a pyrazine ring, a quinoline ring, an isoquinoline ring, an acridine ring, a 3,4-benzoquinoline ring, a 5,6-benzoquinoline ring, a 6,7-benzoquinoline ring, a 7,8-benzoquinoline ring, a 3,4-benzoisoquinoline ring, a 5,6-benzoisoquinoline ring, a 6,7-benzoisoquinoline ring, and a 7,8-benzoisoquinoline ring. Examples of the nitrogen-containing aromatic ring having a positive charge include a pyrrolinium ring, a pyridinium ring, a pyridazinium ring, a pyrimidinium ring, a pyrazinium ring, a quinolinium ring, an isoquinolinium ring, an acridinium ring, a 3,4-benzoquinolinium ring, a 5,6-benzoquinolinium ring, a 6,7-benzoquinolinium ring, a 7,8-benzoquinolinium ring, a 3,4-benzoisoquinolinium ring, a 5,6-benzoisoquinolinium ring, a 6,7-benzoisoquinolinium ring, and a 7,8-benzoisoquinolinium ring. Examples of the oxygen-containing aromatic ring or the sulfur-containing aromatic ring include an aromatic ring in which at least one of a carbon atom and a nitrogen atom of the aromatic ring or the nitrogen-containing aromatic ring containing no hetero atom is replaced with at least one of an oxygen atom and a sulfur atom.

In $R^{11}$, $R^{21}$, $R^{31}$, and $R^{41}$, when the alkyl group or the aromatic ring has a substituent, the substituent is not particularly limited and may be any substituent, and examples thereof include a sulfo group, a nitro group, and a diazo group.

The ammonium represented by the chemical formula (XI) may be, for example, ammonium represented by the following chemical formula (XII).

[Chemical Formula XII]

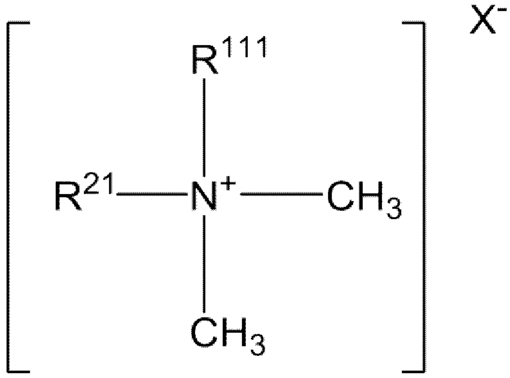

(XII)

In the chemical formula (XII),

$R^{111}$ is a 5-40C alkyl group, and may include an ether bond, a ketone (carbonyl group), an ester bond, an amide bond, a substituent, or an aromatic ring, and
$R^{21}$ and $X^-$ are the same as in the chemical formula (XI).
In $R^{111}$, the aromatic ring is not particularly limited, and for example, may or may not necessarily contain a heteroatom, and may or may not necessarily have a substituent. In $R^{111}$, specific examples of the aromatic ring are not particularly limited, but are, for example, the same as $R^{11}$, $R^{21}$, $R^{31}$, and $R^{41}$ of the chemical formula (XI).
In $R^{111}$, when the alkyl group or the aromatic ring has a substituent, the substituent is not particularly limited, and may be any substituent, and for example, the same as $R^{11}$, $R^{21}$, $R^{31}$, and $R^{41}$ of the chemical formula (XI).

In the chemical formula (XII),
$R^{21}$ may be, for example, a methyl group or a benzyl group. In the benzyl group, one or more of hydrogen atoms of the benzene ring may be or may not necessarily be substituted with an arbitrary substituent. The arbitrary substituent may be, for example, an alkyl group, an unsaturated aliphatic hydrocarbon group, an aryl group, a heteroaryl group, a halogen, a hydroxy group (-OH), a mercapto group (-SH), or an alkylthio group (-SR, R is an alkyl group).
An ammonium salt represented by the chemical formula (XII) may be, for example, ammonium represented by the following chemical formula (XIII).

[Chemical Formula XIII]

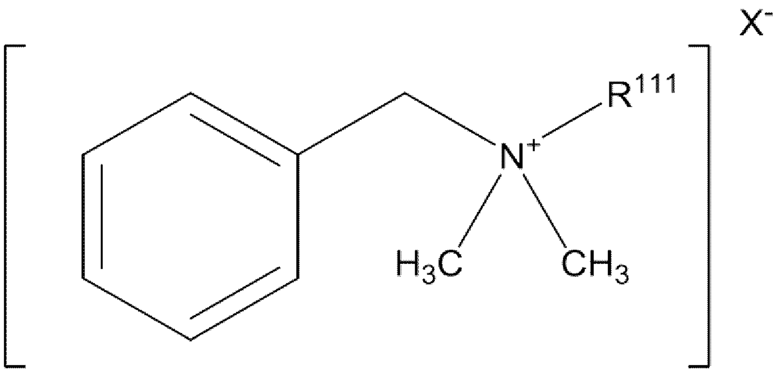

(XIII)

In the chemical formula (XIII),
$R^{111}$ and $X^-$ are the same as in the chemical formula (XII).
The ammonium represented by the chemical formula (XI) may be, for example, an ammonium salt represented

by the following chemical formula (XIV).

[Chemical Formula XIV]

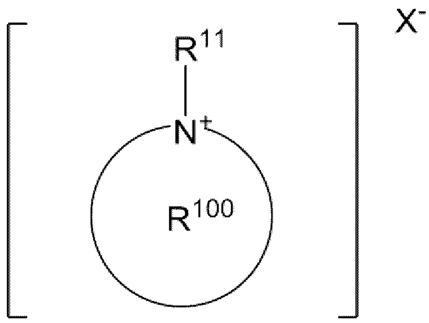

(XIV)

In the chemical formula (XIV),

$R^{100}$ may form a cyclic structure, and the cyclic structure may be saturated or unsaturated, may be an aromatic ring or a non-aromatic ring, and may or may not necessarily have one or more substituents.

$R^{11}$ and $X^-$ are the same as in the chemical formula (XI).

The ammonium salt represented by the chemical formula (XI) may be, for example, an ammonium salt represented by the following chemical formula (XV).

[Chemical Formula XV]

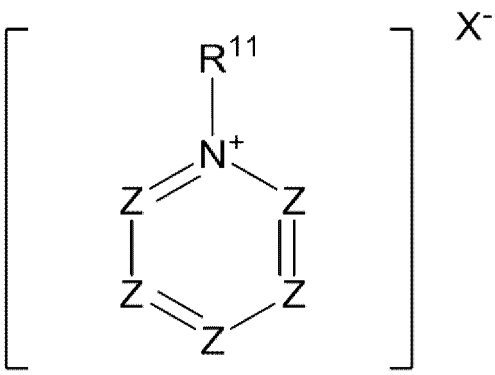

(XV)

In the chemical formula (XV),

Each Z is CH or N and may be the same or different from each other. In Z as CH, H may be substituted with a substituent.

$R^{11}$ and $X^-$ are the same as in the chemical formula (XI).

The ammonium salt represented by the chemical formula (XI) may be, for example, an ammonium salt represented by the following chemical formula (XVI).

[Chemical Formula XVI]

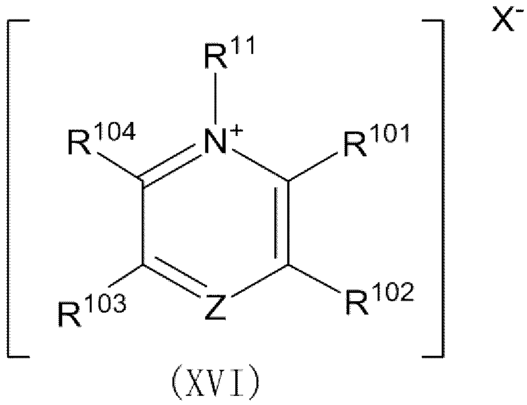

(XVI)

In the chemical formula (XVI), $R^{101}$, $R^{102}$, $R^{103}$, and $R^{104}$ are respectively a hydrogen atom or a substituent, and $R^{101}$, $R^{102}$, $R^{103}$, and $R^{104}$ may be the same or different from each other.

Alternatively, two or more of $R^{101}$, $R^{102}$, $R^{103}$, and $R^{104}$ may be integrated with each other to form a cyclic structure together with $N^+$ to which the two or more of $R^{101}$, $R^{102}$, $R^{103}$, and $R^{104}$ are bonded. The cyclic structure may be saturated or unsaturated, may be an aromatic ring or a non-aromatic ring, and may or may not necessarily have one or more substituents.

Z is CH or N. In Z as CH, H may be substituted with a substituent.
$R^{11}$ and $X^-$ are the same as in Chemical Formula (XI).

The ammonium salt represented by the chemical formula (XI) may be, for example, an ammonium salt represented by the following chemical formula (XVII).

[Chemical Formula XVII]

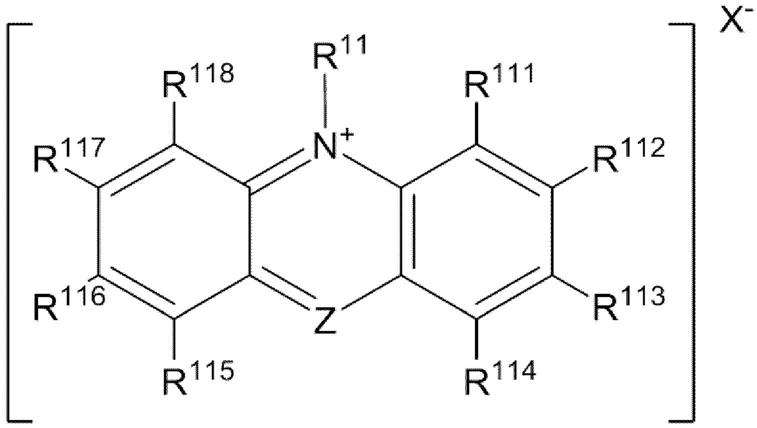

(XVII)

In the chemical formula (XVII), $R^{111}$ to $R^{118}$ are respectively a hydrogen atom or a substituent, and $R^{111}$ to $R^{118}$ may be the same or different from each other.

Alternatively, two or more of $R^{111}$ to $R^{118}$ may be integrated with each other to form a cyclic structure. The cyclic structure may be an aromatic ring or a non-aromatic ring, and may or may not necessarily have one or more substituents.

Z is CH or N. In Z as CH, H may be substituted with a substituent.
$R^{11}$ and $X^-$ are the same as in the chemical formula (XI).

The ammonium salt represented by the chemical formula (XI) may be, for example, at least one selected from the group consisting of benzethonium chloride, benzalconium chloride, hexadecyltrimethylammonium chloride, tetramethylammonium chloride, ammonium chloride, methylammonium chloride, and tetrabutylammonium chloride. Further, the ammonium salt represented by the chemical formula (XII) is particularly preferred to be benzethonium chloride.

Benzethonium chloride ($Bzn^+Cl^-$) can be represented by, for example, the following chemical formula. Benzalkonium chloride can be represented as a compound of the chemical formula (XIII) in which $R^{111}$ is a 8-18C alkyl group and $X^-$ is a chloride ion.

[Chemical Formula Bzn]

$Bzn^+Cl^-$

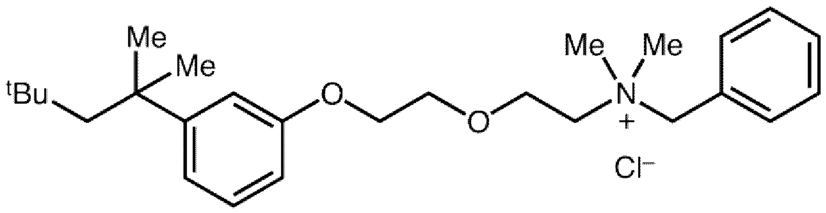

In the chemical formulae (XI), (XII), (XIII), (XIV), (XV), (XVI), and (XVII), $X^-$ may be any anion, and is not particularly limited. Further, $X^-$ is not limited to a monovalent anion, and may be an anion of any equivalent valence such as divalent, trivalent, and the like. For example, when the charges of the anion are two more equivalents such as divalent and trivalent, the number of molecules of ammonium (monovalent) in the chemical formulae (XI), (XII), (XIII), (XIV), (XV), (XVI), and (XVII) is equal to the number of molecules of the anion multiplied by the valence of the anion (for example, when the anion is divalent, the number of molecules of ammonium (monovalent) is twice the number of molecules of the anion). Examples of $X^-$ include a halogen ion (fluoride ion, chloride ion, bromide ion, and iodide ion), an acetate ion, a nitrate ion, and a sulfuric acid ion.

In the present invention, the radical generation catalyst is not limited to the chemical formulae (XI), (XII), (XIII), (XIV), (XV), (XVI), and (XVII), and may be ammonium having any structure including an aromatic ring. Non-limiting examples of the aromatic ring include the aromatic rings exemplified in $R^{11}$, $R^{21}$, $R^{31}$ and $R^{41}$ of the chemical formula (XI).

In the present invention, the radical generation catalyst may be, for example, a sulfonic acid-based amine or ammonium thereof. The sulfonic acid-based amine is, for example, an amine having a sulfo group (sulfonic acid group) in the molecule. Examples of the sulfonic acid-based amine include taulin, a sulfamic acid, 3-amino-4-hydroxy-1-naphthalenesulfonic acid, a sulfamic acid, p-toluidin-2-sulfonic acid, o-anisidin-5-sulfonic acid, Direct Blue 14, 3-[N,N-bis(2-hydroxyethyl)-amino]-2-hydroxypropane sulfonic acid, 3-[(3-colamidopropyl)dimethylammonio]-1-propanesulfonate, aminomethanesulfonic acid, 3-amino-1-propanesulfonic acid, 2-aminobenzensulfonate, R(+)-3-aminotetrahydrofuran toluene, 4-amino-5-hydroxy-1,7-naphthalenesulfonic acid, N-(2-acetamido)-2-aminoethanesulfonic acid, sodium 4'-amino-3'-methoxyazobenzene-3-sulfonic acid, Lapatinib ditosylate, N-tris(hydroxymethyl)methyl-2-aminoethanesulfonic acid, 1-naphthylamine-3,6,8-trisulfonic acid disodium salt hydrate, 1-aminonaphtalene-2-sulfonic acid, (2S,3S)-3-amino-2-methyl-4-oxo-1-azetidinesulfonic acid, sodium 3-(1-naphthylamino)propane sulfonic acid, 3-methyl-4-aminobenzenesulphonic acid, sodium 3-cyclohexylamino-2-hydroxypropane sulfonic acid, sodium N-tris(hydroxymethyl) methyl-2-aminoethanesulfonic acid, 4-amino-1-naphthalenesulfonic acid, sodium sulfamic acid, Tricaine, sodium sulfanilic acid, 1,4-phenylenediamine-2-sulphonic acid, p-anisidin-2-sulphonic acid, 6-amino-1-naphthalenesulphonic acid, 3,4-diaminobenzenesulfonic acid, 3-amino-4-chlorobenzenesulphonic acid, 3-[(4-amino-3-methylphenyl)azo]benzenesulphonic acid, 3-amino-4-hydroxy-5-nitrobenzenesulfonic acid, 2-Amino-4-nitrophenol-6-sulfonic acid, 4-acetamido-2-aminobenzenesulfonic acid hydrate, 2-aminophenol-4-sulfonic acid, dansyl acid, Sulfamic acid [(1S,2S,4R)-4-[4-[[(1S)-2,3-dihydro-1H-inden-1-yl]amino]-[7H-pyrrolo]-[2,3-d]-pyrimidin-7-yl]-2-hydroxycyclopentyl] methyl ester, 5-sulfo-4'-diethylamino-2,2'-dihydroxyazobenzen, 2-aminonaphthalene-6,8-disulfonic acid, 2-[N,N-bis(2-hydroxyethyl)amino]-1-sodium ethanesulphoic acid, 3-acetyl-2-(methylaminosulfonyl)thiophene, 4-amino-2-chlorotoluene-5-sodium sulfonic acid, 5-(3-AMINO-5-OXO-2-PYRAZOLIN-1-YL)-2-PHENOXYBENZENESULFONIC ACID, potassium sulfamic acid, amino, P-AMINOAZOBENZENE MONOSULFONIC ACID, 3-[(3-Cholamidopropyl)dimethylammonio]-2-hydroxy-1-propanesulfonate, 3-amino-2,7-naphthalenesulfonate monosodium, 3-[N,N-bis(hydroxyethyl)amino]-2-hydroxypropanesulfonate sodium salt, di(sulfamic acid)cobalt(II), 3-(4-amino-3-methoxyphenylazo)benzenesulfonate, nickel(II) sulfamate tetrahydrate, sodium 2-aminosulphanilate, 5-amino-2-chlorotoluene-4-sulfonate, 4-amino-2,5-dichlorobenzenesulfonic acid, 4-methylbenzenesulfonate, APTS(aminopyrenetrisulfonate), 4'-aminoazobenzene-3-sulfonate, pontacyl carmine 2B, p-anisidin-3-sulfonate, 4,4'-bis(4-amino-1-naphthylazo)-2,2'-stilbenesulfonate, 3-AMINONAPHTHALENE-8-HYDROXY-4,6-DISULFONIC ACID, sodium 4-amino-1,5-naphthalenedisulfonate, sodium 4-aminoazobenzene-4'-sulfonate, 5-amino-2-methylbenzene sulfonate, 7-amino-1,3-naphthalenedisulfonic acid disodium salt, alizarin safirol SE, 7-amino-2-naphthalenesulfonate sodium, 6-amino-5-bromopyridine-3-sulfonate, 2-aminoethanethiol p-toluenesulfonate, 2-amino-1-naphthalenesulfonate sodium, 6-amino-1,3-naphthalenedisulfonic acid disodium salt, N,N,N',N'-tetraethylsulfamide, 5-amino-2-ethoxy-benzenesulfonic acid, 3,5-diamino-2,4,6-trimethylbenzensulfonate, 7-amino-1-naphthalenesulfonate, sulfamic acid, guanidine, 2-amino-5-nitrobenzenesulfonate, nickel bis(sulphamidate), 4-Amino-4'-nitrostilbene-2,2'-disulfonate sodium, aniline-2,5-disulfonate monosodium, 5-Amino-1-naphthol-3-sulfonate hydrate, : 2,5-dichloroaniline-4-sulfonic acid sodium salt, 6-amino-n-hexanoic acid n-hexyl ester p-toluenesulfonate, rac-(R*)-2-(4-chlorophenyl)-3-amino-1-propane sulfonate, 2-(N,N-dipropyl)amino anisole-4-sulfonate, 2-amino-4-chlorophenol-6-sulfonate, 6-amino-1,3-naphthalene disulfonate, 5,10,15,20-tetrakis[4-(trimethylammonio)phenyl]-21H,-23H-porphine tetra tosylate, 5-amino-2-[(4-aminophenyl)amino]benzene sulfonate, 4-amino-3-chlorobenzene sulfonate, 2-aminobenzenesulfonate phenyl ester, 4-acetylamino-4'-isothiocyanatostilben-2,2'-disulfonate disodium, (S)-3-AMINO-2-OXETANONE P-TOLUENESULFONIC ACID SALT, 5-acetylamino-4-hydroxy-2,7-naphthalene disulfonate disodium, 2-phenylamino-5-aminobenzenesulfonate, n-octadecyl disodium sulfosuccinate, and 3,5-diamino-4-methylbenzenesulfonate, and the like.

In the present invention, the radical generation catalyst may be, for example, a nicotinic amine or ammonium thereof. The nicotinic amine is, for example, an amine having a cyclic structure in its molecule where the cyclic structure has a nicotinic skeleton. Examples of the nicotinic amine include nicotinamide and an alkaloid.

In the present invention, the radical generation catalyst may be, for example, a nitrite - based amine or nitrite -based ammonium. The nitrite-based amine or nitrite-based ammonium is, for example, a compound obtained by reacting an amine with a nitrous acid or a nitrite derivative. Examples of the nitrite-based amine or nitrite-based ammonium include a diazo compound, a diazonium salt, a N-nitroso compound, and a C-nitroso compound.

In the present invention, the ammonium may contain a plurality of ammonium structures ($N^+$) in one molecule. Further, the ammonium may have a plurality of molecules associated with each other by, for example, $\pi$-electron interaction to form a dimer, a trimer, or the like.

In the present invention, the amino acid is not particularly limited as long as containing, for example, at least one of amino group or an imino group and at least one carboxy group in its molecule. The amino acid may be, for example, an $\alpha$-amino acid, a $\beta$-amino acid, a $\gamma$-amino acid, or other amino acids. The amino acid may be, for example, an amino acid constituting a protein, and specifically, may be at least one selected from the group consisting of glycine, alanine, valine, leucine, isoleucine, serine, threonine, aspartic acid, glutamic acid, asparagine, glutamine, lysine, hydroxylysine, arginine, cysteine, cystine, methionine, phenylalanine, tyrosine, tryptophan, histidine, proline, and 4-hydroxyproline.

In the present invention, the peptide is not particularly limited. The peptide may be, for example, two or more of the amino acid molecules bonded with each other by peptide bonds. The peptide may be, for example, at least one of oxidized glutathione (GSSG) and reduced glutathione (GSH).

In the present invention, the phospholipid is not particularly limited. The phospholipid may be, for example, a lipid containing a phosphorus atom in the molecule, and may be, for example, a lipid containing a phosphoester bond (P-O-C) in the molecule. The phospholipid may or may not necessarily include at least one of an amino group, an imino group, an ammonium group, and an iminium group in the molecule, for example. The phospholipid may be at least one selected from the group consisting of phosphatidylserine, phosphatidylcholine, phosphatidic acid, phosphatidylethanolamine, phosphatidylglycerol, and cardiolipin, for example.

The radical generation catalyst of the present invention may contain, for example, Branested acid. The Branested acid has an acid dissociation constant $pK_a$ of, for example, 5 or more. The upper limit of the $pK_a$ is not particularly limited, and for example, 50 or less.

The radical generation catalyst of the present invention may catalyze the radical generation of the radical generation source *in vitro,* for example, or may catalyze the generation of radicals from a radical generation source *in vivo.* The *in vivo* may be, for example, in a human body, but may also be in an animal body other than a human.

The radical generation catalyst of the present invention may catalyze the radical generation from the radical generation source, for example, in a digestive organ. The digestive organ may be at least one selected from the group consisting of the oral cavity, the pharynx, the esophagus, the stomach, the duodenum, the small intestine, and the large intestine, for example. The digestive organ may be, for example, the large intestine. The small intestine may be, for example, at least one selected from the group consisting of the duodenum, the jejunum, and the ileum. The large intestine may be, for example, at least one selected from the group consisting of the caecum, the colon, and the rectum. The radical generation catalyst of the present invention may be used, for example, for disinfection of the inside of the digestive organ, induction of changes in intestinal bacterial flora, treatment or suppression of symptoms for ulcerative colitis, and the like.

The content or concentration of the radical generation catalyst of the present invention (component (a)) in the composition of the present invention is not particularly limited, but is, for example, as described later.

[1-2. Composition (b): Radical Generation Source]

In the composition of the present invention, the component (b) as the radical generation source is not particularly limited, but specific examples thereof are as follows. In the following, a radical generation source which can be used as the component (b) in the composition of the present invention is sometimes referred to as the "radical generation source of the present invention".

The radical generation source of the present invention may contain, for example, at least one selected from the group consisting of a halogen ion, a hypohalous acid ion, a halous acid ion, a halogen acid ion, and a perhalogen acid ion. It is particularly preferrable that the radical generation source of the invention contains, for example, a chlorous acid ion. The radical generation source of the present invention may contain, for example, an oxo acid or a salt thereof (e.g., a halogen oxo acid or a salt thereof). Examples of the oxo acid include a boric acid, a carbonic acid, an orthocarbonic acid, a carboxylic acid, a silicic acid, a nitrous acid, a nitric acid, a phosphorous acid, a phosphoric acid, an arsenic acid, a sulfurous acid, a sulfuric acid, a sulfonic acid, a sulfinic acid, a chromic acid, a nichromic acid, and a permanganic acid. The halogen oxo acid may be a chloric oxo acid such as an hypochlorous acid, a chlorous acid, a chloric acid, and a perchloric acid; a bromic oxo acid such as a hypobromous acid, a bromous acid, a bromic acid, and a perbromic acid; and an iodic oxo acid such as a hypoiodous acid, an iodous acid, a iodic acid, and a periodic acid.

The radical generation source of the present invention may be, for example, at least one selected from the group consisting of a halous acid, a halous acid ion, and a halous acid salt, as described above. Examples of the halous acid include a chlorous acid, a bromous acid, and an iodous acid, as described above. The radical generation source of the present invention may be, for example, at least one selected from the group consisting of a chlorous acid, a chlorous acid ion, and a chlorous acid salt, as described above.

When the radical generation source of the present invention is a salt, the salt is not particularly limited, and examples thereof include a sodium salt, a potassium salt, and a calcium salt. The radical generation source of the present invention may be, for example, a sodium chlorite or the like.

The radical generation source of the present invention may be appropriately selected in consideration of, for example, the strength of reactivity of the radical species depending on the application. For example, a hypochlorous acid having strong reactivity and a chlorous acid having slightly milder reactivity than hypochlorous acid and easy to control its reaction, may be selectively used according to the purpose.

The content or the concentration of the radical generation source of the present invention (component (b)) in the composition of the present invention is not particularly limited, and for example, as described later.

[1-3. Composition (c): Additive Component]

In the composition of the present invention, as described above, the component (c) as an additive component includes at least one kind of compound selected from the group consisting of a compound represented by the following chemical formula (I), eucalyptol, dihydroterpineol, 1,4-cineole, pulegone, eugenol, thymol, and benzyl alcohol. In the following, the additive component which can be used as the component (c) in the composition of the present invention is sometimes referred to as the "additive component of the present invention".

[Chemical Formula I]

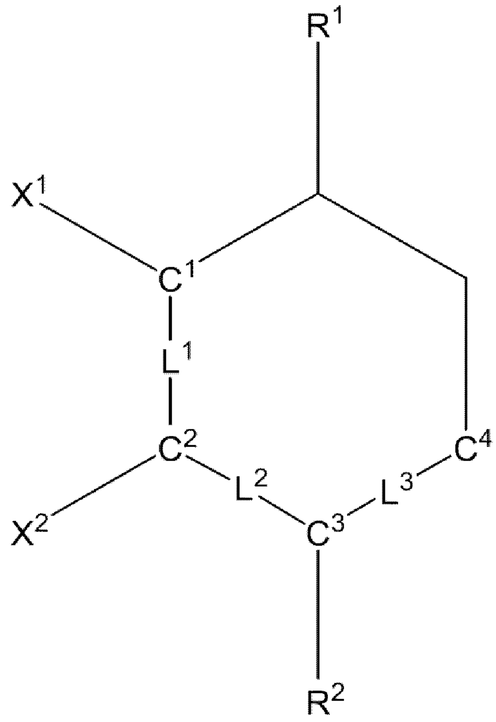

(I)

In the chemical formula (I):

$R^1$ and $R^2$ are respectively a linear or branched, and saturated or unsaturated hydrocarbon group, or the hydrocarbon group in which one or more of hydrogen atoms are substituted with a hydroxyl group, and $R^1$ and $R^2$ may be the same or different from each other;
$X^1$ and $X^2$ are respectively a hydrogen atom, a hydroxyl group, or an oxo group, and may be the same or different from each other, provided that at least one of $X^1$ and $X^2$ is a hydroxyl group or an oxo group;
$C^1$, $C^2$, and $C^3$ are respectively a carbon atom or CH, and may be the same or different from each other;
$C^4$ is CH or $CH_2$, and
$L^1$, $L^2$ and $L^3$ are respectively a single bond or a double bond, and may be the same or different from each other.

It is to be noted that:

when $X^1$ is an oxo group, $C^1$ is a carbon atom, and $L^1$ is a single bond;
when $X^2$ is an oxo group, $C^2$ is a carbon atom, and each of $L^1$ and $L^2$ is a single bond;
when $L^1$ is a double bond, each of $C^1$ and $C^2$ is a carbon atom, each of $X^1$ and $X^2$ is not an oxo group, and $L^2$ is a single bond;
when $L^2$ is a double bond, each of $C^2$ and $C^3$ is a carbon atom, and each of $L^1$ and $L^3$ is a single bond;
when $L^3$ is a double bond, $C^3$ is a carbon atom, $C^4$ is CH, and $L^2$ is a single bond;
when $L^3$ is a single bond, $C^4$ is $CH_2$, and
the compound represented by the chemical formula (I) does not include isopulegol.

As described above, $R^1$ and $R^2$ in the chemical formula (I) may respectively be a linear or branched, and saturated or unsaturated hydrocarbon group, or the hydrocarbon group in which one or more of hydrocarbon atoms are substituted with a hydroxyl group, and $R^1$ and $R^2$ may be the same or different from each other. $R^1$ and $R^2$ may respectively be, for example, an alkyl group (saturated hydrocarbon group), an alkenyl group (hydrocarbon group containing a double bond), or an alkynyl group (hydrocarbon group containing a triple bond), or any of these hydrocarbon groups in which one or more of hydrogen atoms are substituted with a hydroxyl group. The carbon numbers of $R^1$ and $R^2$ are not particularly limited and may respectively be, for example, 1-40, 1-32, 1-24, 1-18, 1-12, 1-6, or 1-2 (more than 2 in an unsaturated

hydrocarbon group), as described above. In $R^1$ and $R^2$, the alkyl group may be, for example, a methyl group, an ethyl group, an isopropyl group, a 1-butyl group (n-butyl group), a 2-butyl group (isobutyl group), and a 2-methyl-2-propyl group (tert-butyl group), or the like. In $R^1$ and $R^2$, the alkenyl group may be, for example, a vinyl group, a 1-propenyl group, a 2-propenyl group (allyl group), an isopropenyl group, or the like. In $R^1$ and $R^2$, the alkynyl group may be, for example, an ethynyl group, a propargyl group, or the like. The group obtained by substituting one or more of hydrogen atoms of the hydrocarbon group with a hydroxyl group may be, for example, a hydroxyalkyl group, such as a hydroxymethyl group, a 1-hydroxyethyl group, a 2-hydroxyethyl group, a 1-hydroxyisopropyl group, a 2-hydroxyisopropyl group, or the like.

Regarding $R^1$ and $R^2$ in the chemical formula (I), for example, $R^1$ may be an isopropyl group, an isopropenyl group, a 1-hydroxyisopropyl group, or a 2-hydroxyisopropyl group, and $R^2$ may be a methyl group. Regarding $R^1$ and $R^2$ in the chemical formula (I), for example, $R^1$ may be a methyl group, and $R^2$ may be an isopropyl group, an isopropenyl group, a 1-hydroxyisopropyl group, or a 2-hydroxyisopropyl group.

The compound represented by the chemical formula (I) may be, for example, at least one selected from the group consisting of menthol, menthone, isomenthone, piperitone, dihydrocarvone, carveol, and carvone, as described above.

As described above, the additive component of the present invention functions as a perfume, for example. Therefore, the composition of the present invention containing the additive component of the present invention (component (c)) allows, for example, stable blending of a perfume into the composition of the present invention containing the radical generation catalyst (component (a)) and the radical generation source (component (b)), and impartation of an appropriate aroma or flavor thereto. As a result, for example, the radical generation source can be used in various situations, and its use range can be greatly expanded. Also, for example, the inclusion of the additive component of the present invention (component (c)) can prevent impairment of the stability of the composition itself or may improve the stability of the composition itself. The radical generation source (component (b)) is not particularly limited and may be, for example, a chlorous acid or a salt thereof as described above.

The content or the concentration of the additive component of the present invention (component (c)) in the composition of the present invention is not particularly limited, and for example, as described later.

[1-4. Optional Component]

The composition of the present invention may or may not necessarily contain any optional component other than the components (a) to (c). Non-limiting examples of the optional component include water, an organic solvent, a pH adjusting agent, and a buffering agent, and one kind of the optional component may be used alone, or two or more kinds of the optional components may be used in combination. The water is not particularly limited, but is preferred to be, for example, purified water, ion-exchanged water, or pure water.

The content or the concentration of the optional component in the composition of the present invention is not particularly limited, and for example, as described later.

[2. Use, Constitution, etc. of Composition]

As described above, the composition of the present invention contains the components (a) to (c), and may or may not necessarily contain any other optional components.

The use of the composition of the present invention is not particularly limited, and the composition can be used as an agent, for example. The use of the agent is not particularly limited, and examples thereof include a disinfection agent, an antibacterial agent, an antivirus agent, a cleaning agent, and a moisturizing agent. Described hereinafter is mainly in a case where the composition of the present invention is an agent. Note that, hereinafter the composition of the present invention as an agent is sometimes referred to as the "agent of the present invention".

The present invention can provide, for example, a highly safe agent with high disinfection effect, antibacterial effect, antivirus effect, and the like.

The agent of the present invention can be used, for example, as an agricultural and livestock agent. Hereinafter, the agent of the present invention which can be used as an agricultural and livestock agent is sometimes referred to as the "agricultural and livestock agent of the present invention".

The agricultural and livestock agent of the present invention have, for example, high safety and high disinfection effect. Therefore, the agricultural and livestock agent of the present invention can be widely used for disinfection, deodorization, and the like in agricultural and livestock industries, for example. Further, the agricultural and livestock agent of the present invention hardly cause corrosion even when they are used as metals, for example. Therefore, the agricultural and livestock agent of the present invention can be used, for example, for an object containing a metal.

The composition of the present invention (e.g., the agent of the present invention) may contain, for example, a radical generation catalyst which catalyzes the radical generation from at least one radical source selected from the group consisting of a halous acid, a halous acid ion, and a halous acid salt.

In the composition of the present invention (e.g., the agent of the present invention), for example, Lewis acidity of

the radical generation catalyst of the present invention is not particularly limited, and for example, 0.4eV or higher, 0.5eV or higher, or 0.6eV or higher, and for example, 20eV or lower, as described above.

The composition of the invention (e.g., the agent of the present invention) may be, for example, liquid, solid, or semi-solid. Further, the agent of the present invention may be acidic or non-acidic, basic or non-basic, and neutral or non-neutral.

For example, the composition of the present invention (e.g., the agent of the present invention) may contain the radical generation catalyst of the present invention, and at least one selected from the group consisting of a halous acid, a halous acid ion, and a halous acid salt, wherein the radical generation catalyst of the present invention is a radical generation catalyst which catalyzes radical generation from at least one radical generation source selected from the group consisting of a halous acid, a halous acid ion, and a halous acid salt, and Lewis acidity of the radical generation catalyst is 0.4eV or higher, and the composition of the present invention may also be a liquid composition (e.g. a liquid agent) characterized by being non-acidic.

In the composition of the present invention (e.g., the agent of the present invention), the radical generation source may be appropriately selected in consideration of, for example, the strength of reactivity of the radical species depending on the application. For example, a hypochlorous acid having strong reactivity and a chlorous acid having slightly milder reactivity than a hypochlorous acid and easy to control the reaction may be selectively used depending on the purpose.

In the composition of the present invention (e.g., the agent of the present invention), the content of the radical generation catalyst (component (a), e.g., ammonium, cation surfactant, etc.) is not particularly limited and may be, for example, 0.01 ppm or more, 0.05 ppm or more, 0.1 ppm or more, 1500 ppm or less, 1000 ppm or less, 500 ppm or less, or 250 ppm or less. The radical generation catalyst (e.g., ammonium, cation surfactant, etc.) is preferred to be mixed into the agent at the content of 0.01-1500 ppm, more preferably 0.05-1000 ppm, even more preferably 0.05-500 ppm, and even more particularly preferably 0.1-250 ppm. Note that, the term "ppm" in the present invention refers to a percentage in the mass-to-mass ratio (mass/mass), unless otherwise specified. Since the composition having lower concentration of the radical generation catalyst is considered to have higher safety, the concentration of the radical generation catalyst is preferred to be low. However, if the concentration of the radical generation catalyst be too low, the disinfection effect and the like may not be obtained. In addition, from the viewpoint of preventing the disinfection effect and the like from being lost due to the micelle formation, the concentration of the radical generation catalyst is preferred to be equal to or less than the critical micelle concentration

In the composition of the present invention (e.g., the agent of the present invention), the content of the radical generation source (component (b), e.g., oxoacids, etc.) is not particularly limited, and for example, 0.01 ppm or more, 0.05 ppm or more, 0.1 ppm or more, 1500 ppm or less, 1000ppm or less, or 250 ppm or less. The radical generation source (e.g., oxoacids, etc.) is preferred to be mixed into the agent at the content of 0.01-1500 ppm, more preferably 0.05-1000 ppm, and even more preferably 0.1-250ppm. Since the composition having lower concentration of the radical generation source is considered to have higher safety, the concentration of the radical generation source is preferred to be low. However, if the concentration of the radical generation source be too low, the disinfection effect or the like may not be obtained. From the viewpoint of the disinfection effect and the like, the concentration of the radical generation source is not particularly limited, and preferred to be as high as possible.

In the composition of the present invention (e.g., the agent of the present invention), the content of the additive component (component (c)) is not particularly limited, and for example, 0.001 ppm or more, 0.01 ppm or more, 0.1 ppm or more, 1 ppm or more, 1000 ppm or less, 900 ppm or less, 800 ppm or less, 500 ppm or less, 100 ppm or less, or 50 ppm or less. The additive component (component (c)) is preferred to be mixed into the agent at the content of 0.001-1000 ppm, more preferably 0.01-800 ppm, even more preferably 0.1-500 ppm, and particularly preferably 1-50ppm. From the viewpoint of possibility that the function as the additive component is not exerted, for example, to impart an aroma or flavor appropriately when the function is as a flavoring agent, the concentration of the additive component (component (c)) is preferred to be not too low. From the viewpoint that the radical generation source and the radical generation catalyst can be stably maintained in the composition, the concentration of the additive component (component (c)) is preferred to be not too high.

The concentration ratio between the radical generation source (component (b)) and the radical generation catalyst (component (a)) (radical generation source/radical generation catalyst) in the composition of the present invention (e.g., the agent of the present invention) is not particularly limited and can be appropriately set, and for example, the blending ratio of the radical generation catalyst to the radical generation source is preferred to be 0.0001-1000, more preferred to be 0.001-100, and even more preferred to be 0.1-10 in mass ratio (weight ratio).

The concentration ratio between the additive component (component (c)) and the radical generation catalyst (component (a)) (additive component/radical generation catalyst) in the composition of the present invention (e.g., the agent of the present invention) is not particularly limited and can be appropriately set, and for example, 0.00001 or more, 0.0001 or more, 0.001 or more, 0.005 or more, 0.01 or more, 0.1 or more, 1000 or less, 100 or less, 10 or less, 5 or less, or 3 or less. The blending ratio of the additive component to the radical generation catalyst is preferred to be 0.00001-1000, more preferred to be 0.0001-100, even more preferred to be 0.001-20, particularly preferred to be 0.002-10, and most

preferred to be 0.01-5 in mass ratio (weight ratio).

The concentration ratio between the additive component (component (c)) and the radical generation source (component (b)) (additive component/radical generation source) in the composition of the present invention (e.g., the agent of the present invention) is not particularly limited and can be appropriately set, and for example, 0.000001 or more, 0.00001 or more, 0.0001 or more, 0.001 or more, 0.005 or more, 0.01 or more, 10000 or less, 1000 or less, 100 or less, 10 or less, 5 or less, 3 or less, or 1 or less. The blending ratio of the additive component to the radical generation source is preferred to be 0.000001-10000, more preferred to be 0.00001-1000, even more preferred to be 0.0001-100, particularly preferred to be 0.001-10, and most preferred to be 0.005-5 in mass ratio (weight ratio).

The composition of the present invention (e.g., the agent of the present invention) may further contain an optional component other than the components (a) to (c), as described above. Non-limiting examples of the optional component include water, an organic solvent, a pH adjusting agent, and a buffering agent, and one kind of the optional component may be used alone, or two or more kinds of the optional components may be used in combination (same applies hereafter). The water is not particularly limited, but is preferred to be, for example, purified water, ion-exchanged water, or pure water.

The composition of the present invention (e.g., the agent of the present invention) is preferred to contain at least one of water and an organic solvent. In the present invention, a "solvent" may or may not necessarily dissolve the radical generation catalyst, the radical generation source, and the like of the present invention. For example, after the mixing, the radical generation catalyst of the present invention, the radical generation source of the present invention, and the additive component of the present invention may respectively be dissolved in the solvent, but may be dispersed or precipitated in the solvent. In the agent of the present invention, from the viewpoint of safety, cost, and the like, it is preferred to use water as a solvent for the radical generation catalyst of the present invention, the radical generation source of the present invention, and the additive component of the present invention. Examples of the organic solvent include ketone such as acetone, a nitrile solvent such as acetonitrile, and an alcohol solvent such as ethanol, and one kind of the solvent may be used alone or two or more kinds of the solvents may be used in combination. The kind of the solvent may be selected depending on, for example, the solubility of a solute (e.g., the radical generation catalyst, the radical generation source, and the additive component of the present invention, etc.).

The pH of the composition of the present invention (e.g., the agent of the present invention) is not particularly limited, and for example, 4.0 or more, 4.5 or more, 5.0 or more, 5.5 or more, 6.0 or more, 6.5 or more, 7.0 or more, or 7.5 or more. The pH of the agent of the present invention may also be, for example, 11.5 or less, 11.0 or less, 10.5 or less, 10.0 or less, 9.5 or less, 9.0 or less, 8.5 or less, 8.0 or less, or 7.5 or less.

The composition of the present invention (e.g., the agent of the present invention) can be produced, for example, by mixing the radical generation catalyst of the present invention (component (a)), the radical generation source of the present invention (component (b)), the additive component of the present invention (component (c)), and the optional component (e.g., at least one of the water and the organic solvent, and a further optional component if necessary) as needed. For example, the composition of the present invention can be obtained as described in the following Examples, but is not limited thereto.

The agent of the present invention is preferred to contain the water, but may not necessarily contain the water, for example. The mixing amount of the water (water ratio) in the agent is not particularly limited. The water ratio may be, for example, the remnant of other components. The agent may or may not necessarily further include, for example, the pH adjusting agent, the buffering agent, and the like as other substances.

The method for using the composition of the present invention (e.g., the agent of the present invention) is not particularly limited, and the composition can be used, for example, in the same manner as a conventional disinfection agent or the like. Specifically, for example, the composition of the present invention (e.g., the agent of the present invention) may be sprayed on or applied to an object. Specifically, for example, for space deodorization, the composition of the present invention can be sprayed to be used. For use in the oral cavity, the composition of the present invention can be used as an aqueous solution for gargling and cleaning. For sterilization of decubitus, the composition of the present invention can be applied to the affected part. For affected parts such as a self-destructive wound of cancer and parts affected by Trichophyton, it is possible to apply cotton, gauze, or the like impregnated with the composition of the present invention to the affected parts. For hand sterilization, the composition of the present invention can be used as an aqueous solution so that it can be rubbed into hands. For cleaning of medical equipment, the composition of the present invention can be sprayed to the equipment or as an aqueous solution for immersing the equipment. The composition of the present invention can be applied to beds, tables, doorknobs, and the like for sterilization and protection.

(Disinfection Agent)

The agent of the present invention can be used, for example, as a disinfection agent, as described above. There are various kinds of disinfection agent which have been conventionally used, but they have insufficient disinfection effects. In some of these, it may be possible to improve their disinfection effects by increasing their concentration, but there is a problem in safety. The disinfection agent containing the agent of the present invention has a sufficient disinfection effect

even at a low concentration, and has high safety. The agent of the present invention can be used, for example, as food additives, for surface disinfection of various foods. The agent of the present invention can also be used for sterilization of hospitals, factories, and the like, for example.

(Disinfection Agent for Hand Sterilization)

The agent of the present invention can be used, for example, as a disinfection agent for sterilization of hands, fingers, and the like. The disinfection agent for hand sterilization containing the agent of the present invention has a sufficient disinfection effect even at a low concentration and has high safety.

(Deodorization Agent)

The agent of the present invention can be used, for example, as a deodorization agent. A disinfection agent such as ethanol, which is generally used as a disinfection agent, does not have a deodorizing effect. Chlorine dioxide has a deodorizing effect, but has extremely low safety. There are some products in sale, which are described as having disinfection and deodorizing effects. For example, there are products as agents which are said to exert disinfection and deodorizing effects by being sprayed directly onto cloths, or in the space in rooms, bathrooms, cars, and the like. Usually, a quaternary ammonium salt is used as a disinfection component in such products. However, since the quaternary ammonium salt generally used is not used in combination with a radical generation source (e.g., an oxo acid, etc.), it is often difficult to obtain a sufficient disinfection effect, unless its concentration is high. Thus, there are problems such as stickiness after use. Further, since the quaternary ammonium salt has no deodorizing effect, a deodorizing component is additionally mixed. As the deodorizing component, cyclodextrin is usually used. However, cyclodextrin is not capable of decomposing a component causing a malodor. Cyclodextrin merely masks a component causing a malodor but cannot remove the malodor itself. To this, the deodorization agent containing the agent of the present invention has, for example, a high disinfection effect by having the above-described mechanism, and for example, can decompose a substance which causes a malodor, and thus has a high deodorizing effect.

(Antibacterial Agent for Metal)

The agent of the present invention can be used, for example, as an antibacterial agent for metals. Since the antibacterial agent containing the agent of the present invention is highly safe, it can be sprayed on or applied to, for example, metal products in kitchens. In addition, since the antibacterial agent containing the agent of the present invention is less likely to cause corrosion even in metals.

(Oral Care Agent)

The agent of the present invention can be used, for example, as an oral care agent. The oral care agent including the agent of the present invention is suitable for use in the oral cavity because of its high safety.

(Acne Treatment Agent)

The agent of the present invention can be used, for example, as an acne treatment agent. The acne treatment agent containing the agent of the present invention can be applied to the face because of its high safety.

(Sterilization Agent for Decubitus)

The agent of the present invention can be used, for example, as a sterilization agent for decubitus. The sterilization agent for decubitus containing the agent of the present invention can be applied to the body because of its high safety.

(Disinfection Agent for Fungi)

The agent of the present invention can be used, for example, as a disinfection agent for sterilizing parts affected by fungi such as Trichophyton.

(Disinfection Agent for Water Purification)

The agent of the present invention can kill bacteria such as Legionella which occurs in water in a pool or bath, for

example. Moreover, the agent of the present invention causes no metal corrosion nor gas generation. Therefore, the disinfection agent for water purification containing the agent of the present invention can be used safely.

Furthermore, the agent of the present invention can be used, for example, for the following applications. As described above, the agent of the present invention has high safety and a high disinfection effect. The agent of the present invention can also exert, for example, a deodorizing action. Therefore, the agent of the present invention is useful, for example, for improving QOL (quality of life), or the like.

As described above, the agent of the present invention can also be used for human bodies by taking advantage of its high safety. More specifically, the agent of the present invention may be used, for example, for the following applications.

(1) Protection, treatment, and reduction of symptoms for cystitis
(2) Protection, treatment, and reduction of symptoms for candidiasis (including oral and vaginal cleaning)
(3) Eye drops and eyewashes (including use for diseases such as stye)
(4) Ear/nasal cleaning (otitis media, otitis externa, sinusitis, etc.)
(5) Oral cleaning and PMTC (professional mechanical tooth cleaning), including oral cleaning and PMTC for the protection of aspiration pneumonitis, and for improving QOL (quality of life) of the elderly or disabled people.
(6) Peritoneal lavage (including peritonitis and peritoneal dissemination)
(7) Intestine cleaning
(8) Sterilization and cleaning of skin tissues
(9) Sterilization and cleaning of hands
(10) Sterilization, cleaning, and wiping of affected parts (including wounds)
(11) Treatment for dermatitis such as atopy (sterilization, cleaning, and wiping of affected parts)
(12) Sterilization and cleaning of affected parts of bacterial infections such as hay (paronychia) folliculitis, pruritus, and furuncle

In addition, the agent of the present invention can be used, for example, in general countermeasures in the protection and treatment of infectious diseases. Specifically, for example, the applications are as follows.

(1) Protection of upper respiratory tract infections (including flu, SARS, and MERS)
(2) Protection of food poisoning (Noro, Salmonella, etc.)
(3) Vomit treatment
(4) Inactivation of Hepatitis B and C viruses
(5) Protection, treatment, and reduction of symptoms for ulcerative colitis
(6) Countermeasures against mold and fungi (i.e. can be used for countermeasures against other than bacteria and viruses)
(7) Protection, treatment, reduction of symptoms for stomatitis (e.g., side effects of molecular targeted drugs)
(8) Preoperative and postoperative cares in surgeries (including cancer surgeries)
(9) Care of affected parts of cancer (including oral cavity, mammograms, self-destructive wounds, etc.)

Furthermore, the agent of the present invention can be used, for example, for the following applications, by taking advantage of its disinfection action and high safety.

(1) Dentures cleaning
(2) Disinfection of baby bottles
(3) Disinfection (infection protection), deodorization, and the like of objects to be touched by an unspecified large number of people such as desks and doorknobs
(4) Disinfection, deodorization, and the like of public transportation such as trains, airplanes, and buses
(5) Disinfection of the general surrounding in schools, kindergartens, and nursery schools (including disinfection of desks, doors, shelves, switches, and toys such as building blocks, and the like for infection protection)
(6) Disinfection and the like of medical equipment (including cleaning and disinfection of the inside and pipes of artificial dialyzers)
(7) Wiping or cleaning of equipment for medical examinations such as X-ray, CT, electrocardiogram, and the like
(8) Disinfection of tools for medical consultations and surgeries (including metals, resins, and the like such as surgical knives)

Furthermore, the agent of the present invention can be used, for example, for the following applications, taking the advantage of its decomposition action to proteins.

(1) Stock solution for contact lenses

(2) Cleaning solution for eyeglasses
(3) Ultrasonic cleaning machines
(4) Wiping agents
(5) Wiping and cleaning of glass (including windshield)

Furthermore, the agent of the present invention can be used, for example, for deodorization of the following odors, taking advantage of its deodorizing action.

(1) Halitosis
(2) Body odor
(3) Stool odor
(4) Odor due to chemical substances, gases, and the like (including odor of general factories such as chemical factories and food factories)
(5) Garbage
(6) Kitchen garbage, garbage collection areas, garbage trucks, recycling centers, and incineration sites
(7) Sewage pipes
(8) Trapping equipment such as pipes and oil traps
(9) Tobacco
(10) Medical care (Uses aimed at improving QOL of patients are included. Deodorization of odors caused by self-destructive wounds is included.)
(11) Operation room
(12) Hospital room
(13) Environmental odor (odor of feces, wastewater) in barns of chickens, pigs, cattle, and the like
(14) Sites for producing meats (slaughterhouse)

The agent of the present invention may be used *in vitro,* for example. The agent of the present invention may be used *in vivo,* for example, because of its high safety, as described above. In the agent of the present invention, for example, the radical generation catalyst may catalyze radical generation from the radical generation source *in vivo.* The *"in vivo"* may refer to, for example, in a human body, but may be in a body of an animal other than humans.

The agent of the invention may be used, for example, in a digestive organ. In the agent of the present invention, for example, the radical generation catalyst may catalyze radical generation from the radical generation source in a digestive organ. The digestive organ may be, for example, at least one selected from the group consisting of the oral cavity, the pharynx, the esophagus, the stomach, the duodenum, the small intestine, and the large intestine. The digestive organ may be, for example, the large intestine. The small intestine may be, for example, at least one selected from the group consisting of the duodenum, the jejunum, and the ileum. The large intestine may be, for example, at least one selected from the group consisting of the cecum, the colon, and the rectum. The agent of the present invention may be used, for example, for disinfection of the inside of the digestive organ, induction of changes in intestinal bacterial flora, treatment or suppression of symptoms for ulcerative colitis.

The agent of the present invention may be distributed using, for example, a spray, a humidifier, or the like. In this case, it is possible to obtain, for example, the disinfection action and the deodorizing action on a sprayer, a humidifier, or the like, in addition to the disinfection effect or the like on an object to be sprayed. Further, the agent of the present invention is not limited to the human use, and can also be used for animals other than humans, for example. Specifically, the agent of the present invention can be used, for example, for deodorization of animals and for protection of infectious diseases such as bird flu and swine flu. Examples of the application for animals other than humans include applications similar to those listed above as applications for humans (including applications for human bodies). Further, the application for animals other than humans includes, for example, the use as an agricultural and livestock agent described below.

The agricultural and livestock agent of the present invention has, for example, high safety and a high disinfection effect, as described above. For this reason, the agricultural and livestock agent can be used, for example, as an agricultural agent, a livestock agent, and the like. The agricultural agent can be used, for example, as an agricultural disinfection agent, an agricultural antivirus agent, an agricultural deodorization agent, an agricultural insecticide, an agricultural repellent, an agricultural soil improvement agent, and the like. The livestock agent can be used, for example, as a livestock disinfection agent, a livestock antivirus agent, a livestock deodorization agent, a livestock insecticide, a livestock industrial repellant, a livestock soil improvement agent, and the like. The agricultural agent may be used for one kind of application or two or more kinds of applications, for example.

Examples of the agriculture include rice farming and field farming. Examples of the field farming include farming of vegetables such as cucumbers, tomatoes, onions, Chinese cabbages, and soybeans, potatoes, flowers such as chrysanthemum grown with artificial light, clematis, and banksia roses, fruits such as strawberries, and fertilizers. The livestock industry is, for example, for industrial animals such as cattle, pigs, and chickens.

When using the agricultural and livestock agent of the present invention for the rice farming, the agricultural and livestock agent can be used, for example, as a disinfection agent, an insecticide, a repellent, a soil improvement agent, and the like. Specifically, the agricultural and livestock agent can be used, for example, when presoaking seeds to prevent sliminess, and thereby reducing the water exchange work. Further, the agricultural and livestock agent can be used, for example, at the time of seed presoaking, forcing of sprouting, and sowing to prevent blast disease, sheath blight disease, Rice false smut, Fusarium fujikuroi, and the like. The agricultural and livestock agent can be sprayed on rice fields, for example, to protect rice from leaf bugs, pests, and the like. The agricultural and livestock agent can be sprayed when ploughing and irrigating the fields to improve soil, for example.

When using the agricultural and livestock agent of the present invention in the field farming, the agricultural and livestock agent can be used, for example, as a disinfection agent, an antivirus agent, a soil improvement agent, and the like. Specifically, the agricultural and livestock agent can be sprayed on, for example, leaves of cucumbers, tomatoes, or strawberries to prevent powdery mildew, mosaic disease, and the like. The agricultural and livestock agent can be sprayed on tomato leaves to prevent Botrytis cinerea, Fulvia fulvum, and the like, for example. The agricultural and livestock agent can be sprayed on onion leaves to prevent leaf rust and the like, for example. The agricultural and livestock agent can be sprayed on Chinese cabbage leaves to prevent root knot and the like, for example. By spraying the agricultural and livestock agent on potato fields after cultivation by using a tractor or the like, and cultivating the fields again, continuous cropping damage can be prevented, for example. By immersing seed potatoes in the agricultural and livestock agent, the seed potatoes can be sterilized (disinfected), for example. The agricultural and livestock agent can be sprayed on potato leaves several times, from the time when the potatoes are sprouted to the time of harvest, to prevent scab and the like, for example. The agricultural and livestock agent can be sprayed on, for example, chrysanthemum grown with artificial light, clematis, and banksia roses to prevent powdery mildew and the like.

When using the agricultural and livestock agent of the present invention in the livestock industry, the agricultural and livestock agent can be used, for example, as a disinfection agent, a deodorization agent, or the like. Specifically, the agricultural and livestock agent can be used as a dipping agent for cattle to prevent mastitis and the like, for example. The agricultural and livestock agent can be used for hoof baths of cattle and application to affected parts of hoof diseases to prevent or treat hoof diseases and the like. The agricultural and livestock agent can be sprayed on cattle with a sprayer or the like to prevent respiratory diseases, foot-and-mouth diseases, and the like, for example. The agricultural and livestock agent can be sprayed on barns of cattle, pigs, or chickens with a sprayer or the like for deodorization, for example. The agricultural and livestock agent can be used for chicken eggs for sterilization (disinfection), for example.

The agricultural and livestock agent of the present invention may be sprayed, applied, or distributed onto the object, or may be used to immerse the object therein, for example. Specifically, for example, for space deodorization, the agent can be used by spraying. For affected parts of hoof diseases and the like, absorbent cotton wool, gauze, or the like impregnated with the agent can be applied to the affected parts. For hand sterilization, for example, the agent can be used as an aqueous solution to be rubbed in. Medical equipment and the like can be cleaned by spray coating or immersion with the aqueous solution. For machines such as automobiles, agricultural tools, and forklifts used in the barns, for example, the agricultural and livestock agent can be sprayed on the machines, or used to clean the machines. For odor measures for the industrial animals, for example, the agent can be sprayed with a sprayer or the like, or distributed with a distributer or the like to be used. The agent can be applied to chicken eggs for disinfection, for example.

<Agricultural and Livestock Disinfection Agent >

The agricultural and livestock disinfection agent of the present invention includes the agricultural and livestock agent of the present invention. The agricultural and livestock agent of the present invention can be used, for example, as a disinfection agent. There are a variety of disinfection agent which have been conventionally used, which have insufficient disinfecting effects. Some of these can increase their disinfection effects at increased concentration, but there is a problem in safety. The agricultural and livestock disinfection agent containing the agricultural and livestock agent of the present invention has, for example, a sufficient disinfection effect even at a low concentration, and has high safety.

< Agricultural and Livestock Disinfection Agent for Hand Sterilization >

The agricultural and livestock disinfection agent for hand sterilization of the present invention includes the agricultural and livestock agent of the present invention. The agricultural and livestock agent of the present invention can be used, for example, as an agricultural and livestock disinfection agent for sterilization of hands, fingers, and the like. The agricultural and livestock disinfection agent for hand sterilization containing the agricultural and livestock agent of the present invention has, for example, a sufficient disinfection effect even at a low concentration, and has high safety.

< Agricultural and Livestock Deodorization Agent>

The agricultural and livestock deodorization agent of the present invention agent includes the agricultural and livestock agent of the present invention. The agricultural and livestock agent of the present invention can be used, for example, as an agricultural and livestock deodorization agent. As a general disinfection component, a quaternary ammonium salt is usually used. The quaternary ammonium salt often does not have a sufficient disinfection effect unless the concentration of the quaternary ammonium salt is high, and there is a problem in safety. Further, since the quaternary ammonium salt has no deodorizing effect, a deodorizing component is additionally mixed. A generally used deodorizing component is cyclodextrin, which is actually not capable of decomposing a component causing a malodor. Cyclodextrin merely masks a component causing a malodor, and cannot remove the malodor itself. The agricultural and livestock deodorization agent containing the agricultural and livestock agent of the present invention has, for example, a high disinfection effect and a high deodorizing effect, and is capable of removing a substance causing a malodor.

<Agricultural and Livestock Disinfection Agent against Fungi>

The agricultural and livestock disinfection agent against fungi of the present invention includes the agricultural and livestock agent of the present invention. The agricultural and livestock disinfection agent against fungi of the present invention can be used, for example, as a disinfection agent for sterilizing affected parts of fungi such as ringworm fungi.

<Agricultural and Livestock Water Purification Agent>

The agricultural and livestock water purification agent of the present invention includes the agricultural and livestock agent of the present invention. The agricultural and livestock water purification agent of the present invention can kill bacteria such as Legionella which occurs in water used for the agricultural and livestock industry, for example. In addition, the agricultural and livestock agent of the present invention does not cause metal corrosion nor gas generation. Therefore, the agricultural and livestock water purification agent containing the agricultural and livestock agent of the present invention can be safely used. The agricultural and livestock water purification agent of the present invention can be used, for example, for disinfection of bacteria contained in water, or improving water quality. Therefore, the agricultural and livestock water purification agent of the present invention can also be referred to as, for example, an agricultural and livestock water disinfection agent or an agricultural and livestock water quality improvement agent.

<Method for Using Agricultural and Livestock Agent>

A method of using the agricultural and livestock agent of the present invention includes a process of bringing an object into contact with the agricultural and livestock agent of the present invention. According to the method for using the agricultural and livestock agent of the present invention, for example, the object can be sterilized, deodorized, or the like.

Examples

Hereinafter, Examples of the present invention will be described. However, the present invention is not limited to the following Examples.

[Examples 1 to 4]

The composition of the present invention was prepared as follows. Further, it was confirmed that the additive components of the present invention (component (c)) were stable for a long period of time and hard to be decomposed, in the prepared composition of the present invention.

Firstly, a preparation (composition of the present invention) was prepared according to the formulation in Table 1 below. Next, the prepared preparation was stored at 50° C for 2 weeks to obtain an aged product. Further, GC-MS of the initial product (preparation before 2 weeks of storage) and the aged product (preparation after 2 weeks of storage) was measured as described below to observe the change in the content of the perfume components (additive component of the present invention).

In Table 1 below, the sodium chlorite corresponds to the radical generator of the present invention (component (b)). The benzalkonium chloride corresponds to the radical generation catalyst of the present invention (component (a)). The "perfume" is a mint perfume or a citrus perfume as described later, and four kinds of preparations (compositions of the present invention) were prepared by changing the constitution of the perfume components as described later. The mint or citrus perfumes contain the additive component of the present invention (component (c)), as described later.

[Table 1]

| Formulation Table (w / w %) | |
|---|---|
| Component | Blending amount (g) |
| Sodium chlorite | 0.005 (50ppm) |
| Benzalkonium chloride | 0.003 (30ppm) |
| Sodium dihydrogen phosphate dihydrate | 0.02 |
| Disodium phosphate 12 hydrate | 0.12 |
| Xylit | 1.20 |
| Perfume ( ※) | 0.10 |
| Purified water | Remnant |
| Total | 100g |

[Measurement Method and Analyzation Method by GC-MS]

An ODS cartridge column (Waters Corporation, trade name SepPAK) was conditioned with the first pass through of 10mL of methanol and the second pass through of 10mL of water. 100mL of a sample solution (preparation prepared in the present example, i.e. the composition of the present invention) was passed through the conditioned column and adsorbed on the column. 3mL of ethanol was further passed through to elute the composition adsorbed on the column. The elusion was analyzed by GC-MS and the area of the perfume component contained therein was measured. This measurement was performed for each of the initial product (preparation before 2 weeks of storage) and the aged product (preparation after 2 weeks of storage), and the area of the perfume component contained in each was compared.

<Analytical Conditions>

Column: InertCap Pure-WAX (trade name of the product manufactured by GL Sciences Inc.), 30m, inner diameter 0.25mm, film thickness 0.25μm
Flow rate: Approximately 40cm/sec
Column temperature: The temperature is raised at 5°C per minute from 50°C to 250°C
Injection port temperature : 200°C
Detector temperature : 250°C
Injection amount: 1μL
Split ratio: 1:10

[Change in Content of Compositions of Examples 1 to 4 and Additive Components Thereof]

As described below, the preparations of Examples 1 to 4 were prepared using a mint perfume (1), a mint perfume (2), a mint perfume (3), or a citrus perfume (1) as the "perfume" in Table 1. Each preparation was then measured and analyzed by GC-MS according to the method described above.

Further, the peak area measured by GC-MS of each perfume component in the initial product of the preparations of Examples 1 to 4 was defined as the "initial product area value", and the peak area measured by GC-MS of each perfume component in the aged product was defined as the "aged product area value". "Area change rate (%)" was calculated from the calculated area values, based on the following Equation [1].

$$[1]\ \text{Area change rate (\%)} = \text{initial product area value/aged product area value} \times 100$$

A large value of the "area change rate (%)" indicates that the perfume composition has not been decomposed much and has been stable for a long period of time. A value of "area change rate (%)" close to 100% indicates that the perfume component has been hardly decomposed and has been stable for a long period of time.

Further, the decomposition stability of the additive components was evaluated in three stages, ○, Δ and × as described below, according to the area change rate (%). The evaluation results are shown in Tables 2 to 5 below.

◦: 70% or more
Δ : 30% to less than 70%
×: Less than 30%

[Used Perfume]

Example 1 : Mint perfume (1)
Example 2 : Mint perfume (2)
Example 3 : Mint perfume (3)
Example 4 : Citrus perfume (1)

[Table 2]

| Example 1 : Mint perfume (1) | | |
|---|---|---|
| Component | CAS No. | Decomposition stability of additive component |
| Menthol | 15356-70-4 | ○ |
| Isomenthone | 1196-31-2 | ○ |
| Carvone | 2244-16-8 | ○ |
| Eucalyptol | 470-82-6 | ○ |
| Benzyl alcohol | 100-51-6 | ○ |

[Table 3]

| Example 2 : Mint perfume (2 ) | | |
|---|---|---|
| Component | CAS No. | Decomposition stability of additive component |
| Menthol | 15356-70-4 | ○ |
| Isomenthone | 1196-31-2 | ○ |
| Piperitone | 89-81-6 | ○ |
| Carvone | 2244-16-8 | ○ |
| Eucalyptol | 470-82-6 | ○ |
| Benzyl alcohol | 100-51-6 | ○ |
| Thujanol | 15537-55-0 | × |

[Table 4]

| Example 3: Mint perfume (3) | | |
|---|---|---|
| Component | CAS No. | Decomposition stability of additive component |
| Dihydrocarvone | 5948-04-9 | ○ |
| Menthol | 15356-70-4 | ○ |
| Isomenthone | 1196-31-2 | ○ |
| Dihydroterpineol | 498-81-7 | ○ |
| Piperitone | 89-81-6 | ○ |
| Carvone | 2244-16-8 | ○ |
| Carveol | 99-48-9 | ○ |
| Eucalyptol | 470-82-6 | ○ |

(continued)

| Example 3: Mint perfume (3) | | |
|---|---|---|
| Component | CAS No. | Decomposition stability of additive component |
| Pulegone | 5932-80-6 | ○ |
| Menthofuran | 494-90-6 | × |
| Thujanol | 15537-55-0 | × |
| Linalool | 78-70-6 | × |

[Table 5]

| Example 4 : Citrus perfume (1) | | |
|---|---|---|
| Component | CAS No. | Decomposition stability of additive component |
| Menthol | 15356-70-4 | ○ |
| 1,4-cineole | 470-67-7 | ○ |
| o-cymene | 527-84-4 | × |

As shown in Examples 1 to 4, Thujanol, menthofuran, linalool, and o-cymene were decomposed in the aged products, and no peaks were observed. As will be described later, these components do not correspond to the additive component of the present invention (component (c)). Therefore, the preparations (compositions) containing these perfumes but not containing the additive component of the present invention (component (c)) corresponds to "Comparative Example".

As shown in Tables 2 to 5, among the perfume components included in the mint perfume (1), the mint perfume (2), the mint perfume (3), and the citrus perfume (1) used in Examples 1 to 4, the components corresponding to the additive component of the present invention (component (c)) had high decomposition stability, and decomposition was suppressed even in the aged product, and little or no decrease was observed. That is, it was confirmed that the components corresponding to the additive component of the present invention (component (c)) were stable for a long period of time and hard to be decomposed, in the composition of the present invention. On the other hand, the components which do not correspond to the additive component of the present invention (component (c)) were remarkably decreased in the aged product. Among the perfume components used in the present example, the components corresponding to the additive component of the present invention (component (c)) and the components not corresponding thereto are summarized in Table 6 below.

[Table 6]

| Perfume component not corresponding to additive component of present invention (component (c )) | Perfume component corresponding to additive component of present invention (component ( c ) ) (stable for long period of time and hard to be decomposed) |
|---|---|
| Cymene | Eucalyptol |
| Menthofuran | Benzyl alcohol |
| Thujanol | Menthol |
| Linalool | Isomenthone |
| | Piperitone |
| | Carvone |
| | Dihydrocarvone |
| | Dihydroterpineol |
| | Carveol |
| | 1,4-cineole |
| | Pulegone |

[Example 5]

The composition of the present invention was prepared as follows. Further, it was confirmed that the additive component of the present invention (component (c)) was stable for a long period of time and hard to be decomposed in the prepared composition of the present invention.

Firstly, a preparation (composition of the present invention) was prepared according to the formulation shown in Table 7 below. Next, the prepared preparation was stored at 50° C for 2 weeks to obtain an aged product. Further, GC-MS of the initial product (preparation before 2 weeks of storage) and the aged product (preparation after 2 weeks of storage) were measured as described below to observe the change in the content of the perfume component (additive component of the present invention).

In Table 1 below, the sodium chlorite corresponds to the radical generator of the present invention (component (b)), similarly to Examples 1 to 4. The benzalkonium chloride corresponds to the radical generation catalyst of the present invention (component (a)), similarly to Examples 1 to 4. The "perfume" includes the additive component of the present invention (component (c)), similarly to Examples 1 to 4.

[Table 7]

| Formulation Table (w / w %) | |
|---|---|
| Component | Blending amount (g) |
| Sodium chlorite | 0.005 (50ppm) |
| Benzalkonium chloride | 0.003 (30ppm) |
| Sodium dihydrogen phosphate dihydrate | 0.02 |
| Disodium phosphate 12 hydrate | 0.12 |
| Xylit | 1.20 |
| Propylene glycol | 0.10 |
| Perfume ( ※1) | ( ※2) |
| Purified water | Remnant |
| Total | 100g |
| ( ※1) Perfume component used is described in Table 8<br>( ※2) Perfume component used is described in Table 9 | |

[Measurement Method and Analyzation Method by GC-MS]

Measurement and analyzation by GC-MS were performed in the same manner and under the same analytical conditions as in Examples 1 to 4.

[Table 8]

| Used perfume component | | |
|---|---|---|
| Component | Trade name | Manufacturer |
| Menthol | (-)-Menthol | Tokyo Chemical Industry Co., Ltd. |
| Menthone | (-)-Menthone | Tokyo Chemical Industry Co., Ltd. |
| Dihydrocarvone | (+)-Dihydrocarvone | Sigma-Aldrich |
| Benzyl alcohol | Benzyl Alcohol | FUJIFILM Wako Pure Chemical Corporation |
| Pulegone | (+)-Pulegone | Tokyo Chemical Industry Co., Ltd. |
| Dihydroterpineol | Dihydroterpineol | Combi-Blocks |
| 1,4-cineole | 1,4-Cineole | Tokyo Chemical Industry Co., Ltd. |
| 1,8-cineole | 1,8-Cineole | Tokyo Chemical Industry Co., Ltd. |
| Piperitone | Piperitone | Tokyo Chemical Industry Co., Ltd. |

(continued)

| Used perfume component | | |
|---|---|---|
| Component | Trade name | Manufacturer |
| Carvone | (R)-(-)-Carvone | Tokyo Chemical Industry Co., Ltd. |
| Eugenol | Eugenol | Tokyo Chemical Industry Co., Ltd. |
| Thymol | Tymol | Tokyo Chemical Industry Co., Ltd. |
| Linalool | Linalool | Sigma-Aldrich |

[Change in Content of Compositions of Example 5 and Additive Component Thereof]

As described below, preparations of Example 5 were prepared using the perfumes described in Table 9 below as the "perfume" in Table 7 above. Each of the preparations was then measured and analyzed by GC-MS according to the method described above.

Further, the peak area measured by GC-MS of each perfume component in the initial product of the preparation of Example 5 was defined as the "initial product area value", and the peak area measured by GC-MS of each perfume component in the aged product was defined as the "aged product area value". "Area change rate (%)" was calculated from the calculated area values, based on Equation [1] described in Examples 1 to 4. Further, the decomposition stability of the additive component (component (c), perfume component) was evaluated in three stages, ∘, Δ, and ×, based on the same criteria as in Examples 1 to 4, according to the area change rate (%). The evaluation results are shown in Table 9 below.

[Table 9]

| Aging stability of preparation of Example 5 (area change rate) | | | |
|---|---|---|---|
| Perfume Component | Concentration of perfume component in preparation | Area change rate (%) | Decomposition stability of additive component |
| Menthol | 5 ppm | 100 | ○ |
| Menthol | 10 ppm | 100 | ○ |
| Menthol | 50 ppm | 100 | ○ |
| Menthone | 5 ppm | 75 | ○ |
| Menthone | 10 ppm | 80 | ○ |
| Dihydrocarvone | 4 ppm | 91 | ○ |
| Benzyl alcohol | 3 ppm | 84 | ○ |
| Pulegone | 5 ppm | 100 | ○ |
| Dihydroterpineol | 2 ppm | 99 | ○ |
| 1,4-cineole | 2 ppm | 95 | ○ |
| 1,8-cineole | 1 ppm | 99 | ○ |
| Piperitone | 6 ppm | 89 | ○ |
| Carvone | 5 ppm | 98 | ○ |
| Eugenol | 5 ppm | 97 | ○ |
| Thymol | 5 ppm | 76 | ○ |
| Linalool | 5 ppm | 0 | × |

As shown in Table 9, among the perfume components used in Example 5, the components corresponding to the additive component of the present invention (component (c)) had high decomposition stability, and decomposition was suppressed even in the aged product, and little or no decrease was observed. That is, similarly to Examples 1 to 4, it was confirmed that the components corresponding to the additive component of the present invention (component (c)) were stable for a long period of time and hard to be decomposed, in the composition of the present invention. On the other hand, linalool, which is the component which does not correspond to the additive component of the present invention (component

(c)) was remarkably decreased in the aged product.

In Examples 1 to 4, as described above, a mixture containing several perfume components was used as the mint perfume (1), the mint perfume (2), the mint perfume (3), or the citrus perfume (1). In contrast, in Example 5, a preparation (composition) was prepared using only one perfume component. According to Example 5, even when using only one kind of perfume component in this way, it was confirmed that the components corresponding to the additive component of the present invention (component (c)) were stable for a long period of time and hard to be decomposed in the composition of the present invention, as described above.

While the present invention has been described above with reference to illustrative example embodiments, the present invention is by no means limited thereto. Various changes and variations that may become apparent to those skilled in the art may be made in the configuration and specifics of the present invention without departing from the scope of the present invention.

The whole or part of the example embodiments disclosed above can be described as, but not limited to, the following supplementary notes.

(Supplementary Note 1)
A composition, including:

(a) a radical generation catalyst;
(b) a radical generation source, and
(C) an additive component, wherein
the additive component includes at least one kind of compound selected from the group consisting of a compound represented by following chemical formula (I), eucalyptol, dihydroterpineol, 1,4-cineole, pulegone, eugenol, thymol, and benzyl alcohol.

[Chemical formula I]

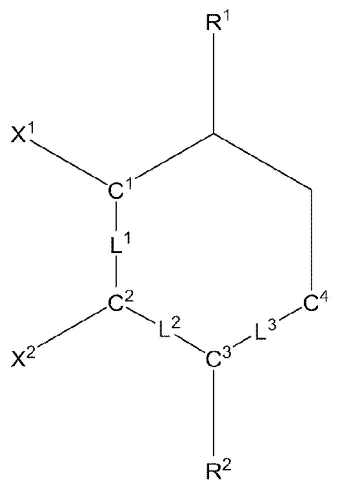

(I)

In the chemical formula (I):

$R^1$ and $R^2$ are respectively a linear or branched and saturated or unsaturated hydrocarbon group, or the hydrocarbon group in which one or more of hydrogen atoms are substituted with a hydroxyl group, and R1 and R2 are the same or different from each other;
$X^1$ and $X^2$ are respectively a hydrogen atom, a hydroxyl group, or an oxo group, and are the same or different from each other, provided that at least one of $X^1$ and $X^2$ is a hydroxyl group or an oxo group;
$C^1$, $C^2$, and $C^3$ are respectively a carbon atom or CH, and are the same or different from each other;
$C^4$ is CH or $CH_2$, and
$L^1$, $L^2$ and $L^3$ are respectively a single bond or a double bond, and are the same or different from each other.

It is to be noted that:

when $X^1$ is an oxo group, $C^1$ is a carbon atom, and $L^1$ is a single bond;

when $X^2$ is an oxo group, $C^2$ is a carbon atom, and each of $L^1$ and $L^2$ is a single bond;
when $L^1$ is a double bond, each of $C^1$ and $C^2$ is a carbon atom, each of X1 and X2 is not an oxo group, and $L^2$ is a single bond;
when $L^2$ is a double bond, each of $C^2$ and $C^3$ is a carbon atom, and each of $L^1$ and $L^3$ is a single bond;
when $L^3$ is a double bond, $C^3$ is a carbon atom, $C^4$ is CH, and $L^2$ is a single bond;
when $L^3$ is a single bond, $C^4$ is $CH^2$, and
the compound represented by the chemical formula (I) does not contain isopulegol.

(Supplementary Note 2)
The composition according to Supplementary Note 1, wherein the compound represented by the chemical formula (I) is at least one selected from the group consisting of menthol, menthone, isomenthone, piperitone, dihydrocarvone, carveol, and carvone.
(Supplementary Note 3)
The composition according to Supplementary Note 1 or 2, wherein the radical generation catalyst is an ammonium salt having Lewis acidity of 0.4ev or higher.
(Supplementary Note 4)
The composition according to any one of Supplementary Notes 1 to 3, wherein the radical generation source is at least one selected from the group consisting of a halous acid, a halous acid ion, and a halous acid salt.
(Supplementary Note 5)
The composition according to any one of Supplementary Notes 1 to 4, wherein the composition is non-acidic and liquid.

This application claims priority from Japanese Patent Application No. 2022-058632 filed on March 31, 2022. The entire subject matter of the Japanese Patent Application is incorporated herein by reference.

Industrial Applicability

As described above, the present invention can provide a composition in which an additive component other than a radical generation source and a radical generation catalyst is stable for a long period of time and hardly decomposed. The additive component of the present invention functions as a perfume, for example, as described above. Therefore, according to the composition of the present invention containing the additive component of the present invention (component (c)), for example, it is possible to blend a perfume stably into the composition of the present invention containing the radical generation catalyst (component (a)) and the radical generation source (component (b)), and to impart an appropriate aroma or a flavor. As a result, for example, it becomes possible to use the radical generation source in various situations, and its use range can be greatly expanded. The composition of the present invention can provide, for example, an agent and an agricultural and livestock agent having high safety and a high disinfection effect. The applications of the agent and the agricultural and livestock agent of the present invention are not particularly limited, and they can be used in a wide range of applications. The agent of the present invention is extremely useful, for example, in a disinfection agent, an antivirus agent, a deodorization agent, an oral care agent, and the like. In addition, the application of the composition of the present invention is not limited to an agent, and it can be used in a wide range of applications.

## Claims

**1.** A composition, comprising:

(a) a radical generation catalyst;
(b) a radical generation source, and
(c) an additive component, wherein

the additive component includes at least one kind of compound selected from the group consisting of a compound represented by following chemical formula (I), eucalyptol, dihydroterpineol, 1,4-cineole, pulegone, eugenol, thymol, and benzyl alcohol,

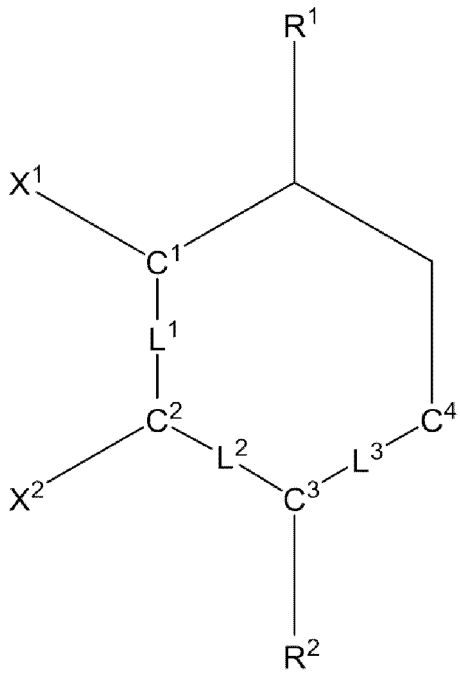

(I)

wherein, in the chemical formula (I):

$R^1$ and $R^2$ are respectively a linear or branched and saturated or unsaturated hydrocarbon group, or the hydrocarbon group in which one or more of hydrogen atoms are substituted with a hydroxyl group, and R1 and R2 are the same or different from each other;
$X^1$ and $X^2$ are respectively a hydrogen atom, a hydroxyl group, or an oxo group, and are the same or different from each other, provided that at least one of $X^1$ and $X^2$ is a hydroxyl group or an oxo group;
$C^1$, $C^2$, and $C^3$ are respectively a carbon atom or CH, and are the same or different from each other;
$C^4$ is CH or $CH_2$, and
$L^1$, $L^2$ and $L^3$ are respectively a single bond or a double bond, and are the same or different from each other,
wherein, it is to be noted that:

when $X^1$ is an oxo group, $C^1$ is a carbon atom, and $L^1$ is a single bond;
when $X^2$ is an oxo group, $C^2$ is a carbon atom, and each of $L^1$ and $L^2$ is a single bond;
when $L^1$ is a double bond, each of $C^1$ and $C^2$ is a carbon atom, each of X1 and X2 is not an oxo group, and $L^2$ is a single bond;
when $L^2$ is a double bond, each of $C^2$ and $C^3$ is a carbon atom, and each of $L^1$ and $L^3$ is a single bond;
when $L^3$ is a double bond, $C^3$ is a carbon atom, $C^4$ is CH, and $L^2$ is a single bond;
when $L^3$ is a single bond, $C^4$ is $CH^2$, and
the compound represented by the chemical formula (I) does not contain isopulegol.

**2.** The composition according to Claim 1, wherein the compound represented by the chemical formula (I) is at least one selected from the group consisting of menthol, menthone, isomenthone, piperitone, dihydrocarvone, carveol, and carvone.

**3.** The composition according to Claim 1 or 2, wherein the radical generation catalyst is an ammonium salt having Lewis acidity of 0.4ev or higher.

**4.** The composition according to any one of Claims 1 to 3, wherein the radical generation source is at least one selected from the group consisting of a halous acid, a halous acid ion, and a halous acid salt.

**5.** The composition according to any one of Claims 1 to 4, wherein the composition is non-acidic and liquid.

# INTERNATIONAL SEARCH REPORT

International application No.
**PCT/JP2023/012670**

## A. CLASSIFICATION OF SUBJECT MATTER

***A01N 59/08***(2006.01)i; ***A01N 25/22***(2006.01)i; ***A01N 33/12***(2006.01)i; ***A01P 1/00***(2006.01)i; ***B01J 31/02***(2006.01)i; ***C07C 31/135***(2006.01)i; ***C07C 33/22***(2006.01)i; ***C07C 35/12***(2006.01)i; ***C07C 35/17***(2006.01)i; ***C07C 49/385***(2006.01)i; ***C07C 49/603***(2006.01)i; ***C11B 9/00***(2006.01)i

FI: A01N59/08 A; C07C31/135; C07C49/603; C07C33/22; C07C35/12; C07C49/385 J; C07C35/17; C11B9/00 G; C11B9/00 M; C11B9/00 D; C11B9/00 C; B01J31/02 102M; A01N33/12 101; A01N25/22; A01P1/00

According to International Patent Classification (IPC) or to both national classification and IPC

## B. FIELDS SEARCHED

Minimum documentation searched (classification system followed by classification symbols)

A01N59/08; A01N25/22; A01N33/12; A01P1/00; B01J31/02; C07C31/135; C07C33/22; C07C35/12; C07C35/17; C07C49/385; C07C49/603; C11B9/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

## C. DOCUMENTS CONSIDERED TO BE RELEVANT

| Category* | Citation of document, with indication, where appropriate, of the relevant passages | Relevant to claim No. |
|---|---|---|
| X | JP 2015-63504 A (NIPPON LIGHT METAL CO., LTD.) 09 April 2015 (2015-04-09) claims, examples 1, 5 | 1-3, 5 |
| X | JP 10-279411 A (LION CORP.) 20 October 1998 (1998-10-20) claims, examples 1-10, paragraphs [0034]-[0039], etc. | 1-3, 5 |
| X | WO 2022/014675 A1 (OSAKA UNIV.) 20 January 2022 (2022-01-20) claims, paragraph [0082], examples, etc. | 1-5 |
| Y | WO 2018/174136 A1 (YAMAMOTO PERFUMERY CO., LTD.) 27 September 2018 (2018-09-27) claims, examples, etc. | 1-5 |
| Y | JP 9-183706 A (OKAZAKI, Yoshiya) 15 July 1997 (1997-07-15) claims, examples, etc. | 1-5 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/012670**

**C. DOCUMENTS CONSIDERED TO BE RELEVANT**

| Category* | Citation of document, with indication, where appropriate, of the relevant passages | Relevant to claim No. |
|---|---|---|
| Y | JP 2-38301 A (BRISTOL MYERS CO.) 07 February 1990 (1990-02-07) claims, example 4, etc. | 1-5 |
| Y | JP 2009-209140 A (ROHTO PHARMACEUT. CO., LTD.) 17 September 2009 (2009-09-17) claims, examples, etc. | 1-5 |
| Y | JP 2017-109978 A (ACENET INC.) 22 June 2017 (2017-06-22) claims, paragraph [0011], examples, comparative examples | 1-5 |
| A | JP 2010-523551 A (THE PROCTER & GAMBLE CO.) 15 July 2010 (2010-07-15) claims, examples, etc. | 1-5 |
| A | JP 2001-271092 A (TAKASAGO INTERNATL. CORP.) 02 October 2001 (2001-10-02) claims, examples, etc. | 1-5 |

Form PCT/ISA/210 (second sheet) (January 2015)

**INTERNATIONAL SEARCH REPORT**
**Information on patent family members**

International application No.
**PCT/JP2023/012670**

| Patent document cited in search report | Publication date (day/month/year) | Patent family member(s) | Publication date (day/month/year) |
|---|---|---|---|
| JP 2015-63504 A | 09 April 2015 | KR 10-2015-0026729 A | |
| JP 10-279411 A | 20 October 1998 | (Family: none) | |
| WO 2022/014675 A1 | 20 January 2022 | (Family: none) | |
| WO 2018/174136 A1 | 27 September 2018 | JP 2018-158998 A | |
| JP 9-183706 A | 15 July 1997 | (Family: none) | |
| JP 2-38301 A | 07 February 1990 | US 4861514 A<br>claims, example 4, table VIII<br>EP 345966 A2<br>KR 10-1990-0000285 A | |
| JP 2009-209140 A | 17 September 2009 | JP 2014-28857 A | |
| JP 2017-109978 A | 22 June 2017 | US 2018/0369798 A1<br>claims, paragraph [0032], examples, comparative examples<br>US 2021/0023538 A1<br>WO 2017/104797 A1<br>EP 3391965 A1<br>CN 108430624 A | |
| JP 2010-523551 A | 15 July 2010 | US 2008/0253976 A1<br>WO 2008/126057 A2<br>EP 2144591 A1<br>CN 101677924 A | |
| JP 2001-271092 A | 02 October 2001 | US 6645254 B1<br>EP 1138755 A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022058632 A


### Non-patent literature cited in the description


- **H. DODGEN** ; **H. TAUBE**. *J. Am. Chem. Soc.*, 1949, vol. 71, 2501-2504
- **J. K. LEIGH** ; **J. RAJPUT** ; **D. E. RICHARDSON**. *Inorg. Chem.*, 2014, vol. 53, 6715-6727
- **C. L. LATSHAW**. *Tappi*, 1994, 163-166
- **J. J. LEDDY**. Riegel's Handbook of Industrial Chemistry. Van Nostrand Reinhold Co. Inc, 1983, 212-235
- **I. FABIAN**. *Coord. Chem. Rev.*, 2001, vol. 216-217, 449-472
- **OHKUBO, K.** ; **FUKUZUMI, S.** *Chem. Eur. J.*, 2000, vol. 6, 4532
- *J. AM. CHEM. SOC.*, 2002, vol. 124, 10270-10271
- *J. Org. Chem.*, 2003, vol. 68, 4720-4726